(19) Europäisches Patentamt
European Patent Office
Office européen des brevets

(11) **EP 4 773 087 A1**

(12) **EUROPEAN PATENT APPLICATION**
published in accordance with Art. 153(4) EPC

(43) Date of publication:
**08.07.2026 Bulletin 2026/28**

(21) Application number: **24874888.1**

(22) Date of filing: **24.09.2024**

(51) International Patent Classification (IPC):
*G06T 19/20* (2011.01)  *G06T 19/00* (2011.01)
*G06F 3/14* (2006.01)  *G06F 3/04815* (2022.01)
*G06F 3/0484* (2022.01)  *G06T 3/40* (2024.01)
*H04N 23/62* (2023.01)  *G06T 7/62* (2017.01)

(52) Cooperative Patent Classification (CPC):
G06F 3/04815; G06F 3/0484; G06F 3/14;
G06T 3/40; G06T 7/62; G06T 19/00; G06T 19/20;
H04N 23/62

(86) International application number:
**PCT/KR2024/014403**

(87) International publication number:
**WO 2025/075330 (10.04.2025 Gazette 2025/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **04.10.2023 KR 20230131919
21.02.2024 KR 20240025330**

(71) Applicant: **Samsung Electronics Co., Ltd.
Suwon-si, Gyeonggi-do 16677 (KR)**

(72) Inventors:
• **BAIK, Kunhoon**
**Suwon-si, Gyeonggi-do 16677 (KR)**
• **KIM, Joonsoo**
**Suwon-si, Gyeonggi-do 16677 (KR)**
• **PARK, Jiwon**
**Suwon-si, Gyeonggi-do 16677 (KR)**
• **JANG, Heonjae**
**Suwon-si, Gyeonggi-do 16677 (KR)**
• **JO, Kyuho**
**Suwon-si, Gyeonggi-do 16677 (KR)**

(74) Representative: **Appleyard Lees IP LLP
G Mill
Dean Clough Industrial Park
Halifax HX3 5AH (GB)**

(54) **METHOD FOR PROVIDING IMAGE OF 3D SPACE AND ELECTRONIC DEVICE THEREFOR**

(57)    A method may be disclosed, the method comprising the steps of: acquiring a camera setting value of a camera to fit a 3D space including an image indicator for controlling a device to a screen of an electronic device; determining a density-independent pixel (DP) value of the image indicator, the DP value corresponding to the size of the image indicator to be displayed on the screen; acquiring a magnification for enlarging or reducing the 3D space on the basis of the DP value of the image indicator, a size ratio of the image indicator in the 3D space, and a DP value of the electronic device; adjusting the camera setting value on the basis of the magnification for enlarging or reducing the 3D space; and displaying, on the screen of the electronic device, an image of the 3D space enlarged or reduced by applying the adjusted camera setting value.

FIG. 1

## Description

### Technical Field

An embodiment of the present disclosure relates to a method of providing an image of a 3D space and an electronic device therefor.

### Background Art

Internet of Things (IoT) refers to an intelligent service that connects all objects via the Internet and enables interaction between people and the objects. IoT devices refer to various devices connected to the Internet by using IoT technologies. For example, IoT devices may include home appliances connected to a network.

As the number of IoT devices in spaces where users live (e.g., homes) increases, a technology that visualizes user experiences with IoT devices in the spaces where users live may be required. For example, when the emerging field of immersive experience, such as hyperconnected/digital twins, is applied to the spaces where users live, new user experiences with IoT devices in the spaces where users live may be provided to the users.

### Disclosure of Invention

### Solution to Problem

According to an embodiment of the present disclosure, a method, performed by an electronic device, of providing an image of a 3D space may include: obtaining setting value of a camera to fit the 3D space to a screen of the electronic device, the 3D space including an image indicator for controlling an IoT device; determining a density-independent pixel (DP) value of the image indicator, the DP value corresponding to a size at which the image indicator is to be displayed on the screen; obtaining, based on the DP value of the image indicator, a size ratio of the image indicator in the 3D space, and a DP value of the electronic device, a magnification for enlarging or reducing the 3D space; adjusting the setting value of the camera based on the magnification for enlarging or reducing the 3D space; and displaying, on the screen of the electronic device, the image of the 3D space enlarged or reduced by applying the adjusted setting value of the camera.

According to an embodiment of the present disclosure, an electronic device for providing an image of a 3D space may include: a memory to store one or more instructions; and at least one processor. The at least one processor may execute the one or more instructions to obtain setting value of a camera to fit the 3D space to a screen of the electronic device, the 3D space including an image indicator for controlling an IoT device. The at least one processor may determine a DP value of the image indicator, the DP value corresponding to a size at which the image indicator is to be displayed on the screen. The at least one processor may obtain, based on the DP value of the image indicator, a size ratio of the image indicator in the 3D space, and a DP value of the electronic device, a magnification for enlarging or reducing the 3D space. The at least one processor may adjust the setting value of the camera based on the magnification for enlarging or reducing the 3D space. The at least one processor may display, on the screen of the electronic device, an image of the 3D space enlarged or reduced by applying the adjusted setting value of the camera.

According to an embodiment of the present disclosure, a computer-readable recording medium may store a program for executing, on a computer, a method including: obtaining setting value of a camera to fit a 3D space to a screen of an electronic device, the 3D space including an image indicator for controlling an IoT device; determining a density-independent pixel (DP) value of the image indicator, the DP value corresponding to a size at which the image indicator is to be displayed on the screen; obtaining, based on the DP value of the image indicator, a size ratio of the image indicator in the 3D space, and a DP value of the electronic device, a magnification for enlarging or reducing the 3D space; adjusting the setting value of the camera based on the magnification for enlarging or reducing the 3D space; and displaying, on the screen of the electronic device, the image of the 3D space enlarged or reduced by applying the adjusted setting value of the camera.

### Brief Description of Drawings

FIG. 1 is a diagram illustrating a system for providing an image of a 3D space, according to an embodiment of the present disclosure.

FIG. 2 is a diagram illustrating an operation, performed by an electronic device, of displaying an image of a 3D space by fitting the 3D space to a screen, according to an embodiment of the present disclosure.

FIG. 3 is a flowchart illustrating a method, performed by an electronic device, of providing an image of a 3D space based on a DP value, according to an embodiment of the present disclosure.

FIG. 4 is a diagram illustrating an operation, performed by an electronic device, of determining a screen display size of a representative electronic device and an image indicator, according to an embodiment of the present disclosure.

FIG. 5 is a diagram illustrating an operation of obtaining a magnification for enlarging or reducing a 3D space, according to an embodiment of the present disclosure.

FIG. 6 is a flowchart illustrating a method, performed by an electronic device, of selecting a representative indicator, according to an embodiment of the present disclosure.

FIG. 7 is a diagram illustrating an operation, performed by an electronic device, of selecting a representative indicator, according to an embodiment of the present disclosure.

FIG. 8 is a flowchart illustrating a method, performed by an electronic device, of providing an image of a 3D space based on an inch value, according to an embodiment of the present disclosure.

FIG. 9 is a diagram illustrating an operation of determining an enlargement ratio in each of various electronic devices, according to an embodiment of the present disclosure.

FIG. 10 is a diagram illustrating an operation, performed by an electronic device, of providing images of 3D spaces of different sizes, according to an embodiment of the present disclosure.

FIG. 11A is a diagram illustrating an operation of providing images of a 3D space in electronic devices with different display sizes, according to an embodiment of the present disclosure.

FIG. 11B is a diagram illustrating an operation of providing an image of a 3D space in an electronic device 1000 including a foldable display, according to an embodiment of the present disclosure.

FIG. 12 is a flowchart illustrating a method, performed by an electronic device, of reducing or enlarging a size ratio of an image indicator in a 3D space, according to an embodiment of the present disclosure.

FIG. 13 is a diagram illustrating an operation, performed by an electronic device, of enlarging a size ratio of an image indicator in a 3D space, according to an embodiment of the present disclosure.

FIG. 14 is a diagram illustrating an operation, performed by an electronic device, of reducing a size ratio of an image indicator in a 3D space, according to an embodiment of the present disclosure.

FIG. 15 is a flowchart illustrating a method, performed by an electronic device, of displaying a user interface (UI) component for controlling an IoT device, according to an embodiment of the present disclosure.

FIG. 16A is a diagram illustrating an operation, performed by an electronic device, of displaying an image of a 3D space, according to an embodiment of the present disclosure.

FIG. 16B is a diagram illustrating an operation, performed by an electronic device, of displaying a UI component for controlling an IoT device, according to an embodiment of the present disclosure.

FIG. 16C is a diagram illustrating an operation, performed by an electronic device, of providing status information of an IoT device, according to an embodiment of the present disclosure.

FIG. 17 is a block diagram illustrating functions of an electronic device according to an embodiment of the present disclosure.

**Mode for the Invention**

The terms used in the present disclosure will be briefly described, and an embodiment of the present disclosure will be described in detail.

The terms used in the present disclosure are selected from among currently widely used general terms by taking into consideration the functions thereof in an embodiment of the present disclosure, but the terms may vary depending on the intention of one of ordinary skill in the art, precedents, or the emergence of new technologies. In addition, in certain cases, terms arbitrarily selected by the applicant may be used, and in such cases, the meanings thereof will be described in detail in the description of corresponding embodiments of the present disclosure. Therefore, the terms used in the present disclosure should be defined based on the meanings of the terms and the overall content of the present disclosure, rather than simply based on the names of the terms.

In the present disclosure, the expression "at least one of a, b, or c" may refer to "a", "b", "c", "a and b", "a and c", "b and c", "all of a, b, and c", or variations thereof.

Throughout the present disclosure, when a part is described as "including" a component, it is to be understood that, unless otherwise specified to the contrary, other components are not excluded and may be further included. In addition, the terms such as "...unit" and "module" used in the present disclosure refer to a unit that processes at least one function or operation, and the "...unit" or "module" may be implemented in hardware, software, or a combination of hardware and software.

It should be understood that blocks in each flowchart and combinations of flowcharts may be performed by one or more computer programs including computer-executable instructions. The one or more computer programs may be stored entirely in a single memory, or may be divided and stored in multiple different memories.

It is to be understood that the singular forms (e.g., "a", "an", and "the") include the plural forms as well, unless the context clearly indicates otherwise. Thus, for example, the term "a component surface" may also include one or more of such surfaces.

Any function or operation described herein may be performed by a single processor or a combination of processors. The single processor or the combination of processors may include circuitry that performs processing, such as an application processor (AP), a communication processor (CP), a graphical processing unit (GPU), a neural processing unit (NPU), a microprocessor unit (MPU), a system-on-chip (SoC), or an integrated chip (IC).

Hereinafter, embodiments of the present disclosure will be described in detail with reference to the accompanying drawings such that one of ordinary skill in the art may easily implement the present disclosure. However, an embodiment of the present disclosure may be implemented in many different forms and is not limited to the embodiments described herein. In addition, in the drawings, parts unrelated to the description are omitted in order to clearly describe an embodiment of the present disclosure, and like elements are denoted by like reference numerals throughout the present disclosure.

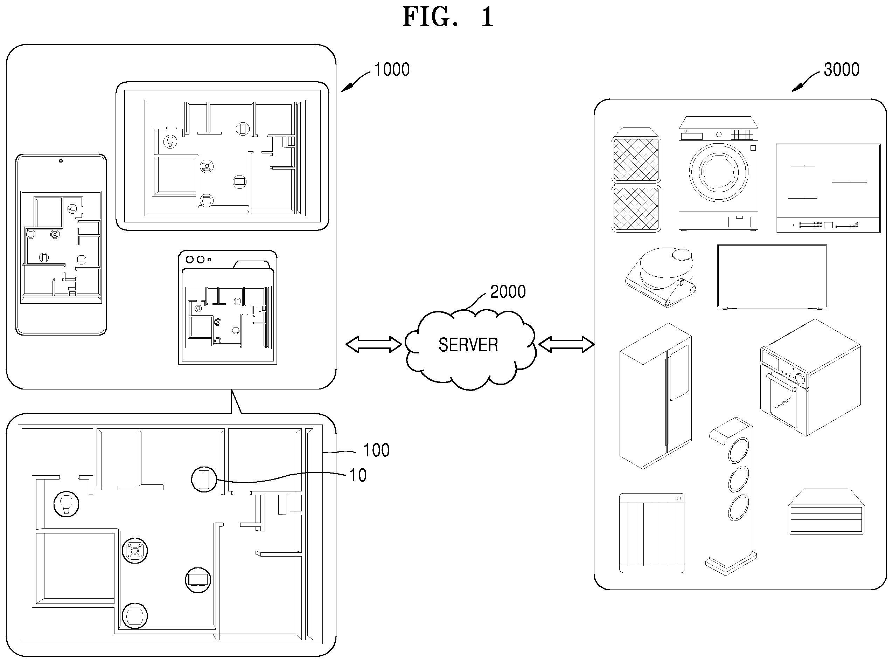

FIG. 1 is a diagram illustrating a system for providing an image 100 of a 3D space, according to an embodiment of the present disclosure.

As illustrated in FIG. 1, the system for providing the image 100 of the 3D space may include an electronic device 1000, a server 2000, and an IoT device 3000, but is not limited thereto. However, not all components illustrated in FIG. 1 are essential components. The system for providing the image 100 of the 3D space may be implemented with more components than those illustrated in FIG. 1, or may be implemented with fewer components. For example, the system for providing the image 100 of the 3D space may be implemented with the electronic device 1000 and the IoT device 3000. In addition, the system for providing the image 100 of the 3D space may be implemented to further include an edge computing device or a smart hub (smart dongle), in addition to the electronic device 1000, the server 2000, and the IoT device 3000. The smart hub may connect the IoT device 3000, which supports Zigbee, Z-Wave, Thread, and Matter communications, to the server 2000. Hereinafter, each component will be described in detail.

The IoT device 3000 may include a communication interface capable of communicating with the electronic device 1000 or the server 2000, a user interface for receiving a user input or outputting information to a user, at least one processor for controlling an operation of the IoT device 3000, and at least one memory for storing a program for controlling the operation of the IoT device 3000, but is not limited thereto.

The IoT device 3000 may be at least one of various types of home appliances. For example, the IoT device 3000 may include at least one of a refrigerator, a dishwasher, an electric range, an electric oven, an air conditioner, a clothes manager, a washing machine, a dryer, or a microwave oven, but is not limited thereto. The IoT device 3000 may include various types of home appliances, such as a robot vacuum cleaner, a vacuum cleaner, and a television. In addition, the aforementioned home appliances are merely examples, and in addition to the aforementioned home appliances, a device that is connected to the electronic device 1000 or the server 2000 and capable of performing operations to be described below may be included in the IoT device 3000 according to an embodiment of the present disclosure.

According to an embodiment of the present disclosure, the IoT device 3000 may be connected to the electronic device 1000 or the server 2000 through an access point (AP), or may be directly connected to the electronic device 1000 or the server 2000 without going through an AP. The AP may connect the IoT device 3000 or the electronic device 1000 to a wide area network (WAN) to which the server 2000 is connected. The IoT device 3000 or the electronic device 1000 may be connected to the server 2000 through the WAN. The AP may communicate with the IoT device 3000 or the electronic device 1000 by using wireless communication, such as Wi-Fi (IEEE 802.11), Bluetooth (IEEE 802.15.1), or Zigbee (IEEE 802.15.4), and may connect to the WAN by using wired communication, but is not limited thereto.

The IoT device 3000 may be connected to the electronic device 1000 or the server 2000 through a long-range wireless network or a short-range wireless network. For example, the IoT device 3000 may be connected to the electronic device 1000 through a short-range wireless network (e.g., Wi-Fi Direct). In addition, the IoT device 3000 may be connected to the electronic device 1000 or the server 2000 through the WAN by using a long-distance wireless network (e.g., a cellular communication module). In addition, the IoT device 3000 may connect to the WAN by using wired communication, and may be connected to the electronic device 1000 or the server 2000 through the WAN.

When the IoT device 3000 may connect to the WAN by using wired communication, the IoT device 3000 may also act as a connection relay. Accordingly, the IoT device 3000 may connect another IoT device to the WAN to which the server 2000 is connected. In addition, the other IoT device may connect the IoT device 3000 to the WAN to which the server 2000 is connected.

The IoT device 3000 may transmit information about an operation or status thereof to the other IoT device, the electronic device 1000, or the server 2000 through a network. For example, the IoT device 3000 may transmit the information about the operation or status thereof to the electronic device 1000 or the server 2000 when a request is received from the server 2000, when a specific event occurs in the IoT device 3000, periodically, or in real time. When receiving, from the IoT device 3000, the information about the operation or status thereof, the server 2000 may update information about the operation or status of the IoT device 3000 stored therein, and may transmit the updated information about the operation or status of the IoT device 3000 to the electronic device 1000 through a network. Here, updating information may include various operations of changing existing information, such as an operation of adding new information to existing information or an operation of replacing existing information with new information.

The IoT device 3000 may obtain various information from the other IoT device, the electronic device 1000, or the server 2000, and may provide the obtained information to the user. For example, the IoT device 3000 may obtain information related to a function of the IoT device 3000 (e.g., recipes, washing instructions, etc.) and various environmental information (e.g., weather, temperature, humidity, etc.) from the server 2000, and may output the obtained information through a user interface.

The IoT device 3000 may operate according to a control command received from the other IoT device, the electronic device 1000, or the server 2000. For example, when the IoT device 3000 obtains prior approval from the user so as to operate according to a control command of the server 2000 even without a user input, the IoT device 3000 may operate according to a control command received from the server 2000. Here, the control command received from the server 2000 may include a control command input by the user through the electronic device 1000 or a control command based on preset conditions, but is not limited thereto.

The server 2000 may include a communication interface capable of communicating with another server, the electronic device 1000, or the IoT device 3000, at least one processor capable of processing data received from the other server, the electronic device 1000, or the IoT device 3000, and at least one memory capable of storing a program for processing data or processed data. The server 2000 may be implemented as various computing devices, such as a workstation, a cloud, a data drive, and a data station. The server 2000 may be implemented as one or more servers that are physically or logically separated based on functions, detailed configurations of the functions, or data, and may transmit and receive data through communication between the servers and process the transmitted and received data.

The server 2000 may perform functions such as managing a user account, registering the IoT device 3000 by linking the IoT device 3000 to the user account, and managing or controlling the IoT device 3000 that has been registered. For example, the user may access the server 2000 through the electronic device 1000, and may create a user account. The user account may be identified by an **ID** and a password that are set by the user. The server 2000 may register the IoT device 3000 to the user account according to a set procedure. For example, the server 2000 may register, manage, and control the IoT device 3000 by linking identification information (e.g., a serial number or an MAC address) of the IoT device 3000 to the user account.

The server 2000 may determine a control command by using technologies such as artificial intelligence. For example, the server 2000 may receive information about an operation or status of the IoT device 3000 or information about the user of the electronic device 1000, may process the information by using technologies such as artificial intelligence, and may transmit, based on a processing result, the processing result or a control command to the IoT device 3000 or the electronic device 1000.

The electronic device 1000 may be at least one of various devices owned by the user. That is, the user may own various types of electronic devices 1000 having different resolutions, display sizes, etc. The electronic device 1000 may be carried by the user, or may be arranged in the user's home or office.

The electronic device 1000 may include, for example, a portable telephone, a smart phone, a laptop computer, a tablet PC, a wall pad, an e-book terminal, a digital broadcasting terminal, a personal digital assistant (PDA), a portable multimedia player (PMP), a navigation, an MP3 player, a digital camera, etc., but is not limited thereto. The electronic device 1000 may be a wearable device that may be worn by the user. The wearable device may include at least one of an accessory type device (e.g., a watch, a ring, a wristband, an ankle band, a necklace, glasses, or contact lenses), a head-mounted device (HMD), a fabric or clothing-integrated device (e.g., an electronic garment), a body-attached device (e.g., a skin pad), or a bio-implantable device (e.g., an implantable circuit), but is not limited thereto. The electronic device 1000 may be a home appliance including a display. For example, the electronic device 1000 may include a TV, a refrigerator, etc., but is not limited thereto.

The electronic device 1000 may include a communication interface capable of communicating with the IoT device 3000 or the server 2000, a user interface for receiving a user input or outputting information to the user, at least one processor for controlling an operation of the electronic device 1000, and at least one memory for storing a program for controlling the operation of the electronic device 1000, but is not limited thereto.

A program for controlling the IoT device 3000, that is, an application, may be stored in the memory of the electronic device 1000. The application may be sold in a state of being installed on the electronic device 1000, or may be installed thereon after being downloaded from an external server.

By executing the application installed on the electronic device 1000, the user may access the server 2000 to create a user account, and may perform communication with the server 2000 based on the logged-in user account to register the IoT device 3000.

For example, when the IoT device 3000 is operated such that the IoT device 3000 may be connected to the server 2000 according to a procedure guided by the application installed on the electronic device 1000, the server 2000 may register the identification information (e.g., the serial number or the MAC address) of the IoT device 3000 to the user account, thereby registering the IoT device 3000 to the user account.

The electronic device 1000 according to an embodiment of the present disclosure may be a user terminal that provides the image 100 of the 3D space to the user. The 3D space may be a space set by the user of the electronic device 1000. For example, the 3D space may be a space where the user lives (e.g., a home, an office, etc.), but is not limited thereto. The 3D space may also be expressed as a 3D map.

According to an embodiment of the present disclosure, the user may define the 3D space according to a procedure guided by the application installed on the electronic device 1000 (e.g., an application for managing a home appliance). For example, the user may define the 3D space based on a floor plan corresponding to a building (e.g., an apartment) in which the user currently lives. The user may also define the 3D space based on a map generated by a robot vacuum cleaner. The user may also directly design or configure the 3D space. The 3D space may be a single space, or may include a plurality of spaces distinct from each other. The 3D space may also include furniture or a home appliance. When the user defines the 3D space through the application installed on the electronic device 1000, information about the 3D space defined by the user may be transmitted to the server 2000, and the information about the 3D space defined by the user may be stored in the server 2000.

The user may control the IoT device 3000 by using the application installed on the electronic device 1000. For example, when the user logs into a user account with the application installed on the electronic device 1000, the IoT device 3000 registered to the user account may appear, and when a control command for the IoT device 3000 is entered, the control command may be transmitted to the IoT device 3000 through the server 2000.

Meanwhile, as illustrated in FIG. 1, when the user executes the application installed on the electronic device 1000 and requests the image 100 of the 3D space, the electronic device 1000 may receive information of the 3D space from the server 2000 and display the image 100 of the 3D space on a screen (display). In this case, the image 100 of the 3D space may include objects constituting the 3D space (e.g., a sofa, a desk, etc.), and an image indicator 10 corresponding to the IoT device 3000 registered to the server 2000. The user may input a control command for the IoT device 3000 through the image indicator 10 included in the image 100 of the 3D space.

The image indicator 10 may be a UI component created to enable the user to interact with the electronic device 1000 or the server 2000. The image indicator 10 may also be expressed as a visual element, a visual component, an icon, a control button, a control item, or a control object. The image indicator 10 may include a thumbnail image or an icon image of the IoT device 3000 corresponding thereto. In FIG. 1, a case in which the image indicator 10 is circular is illustrated as an example, but the present disclosure is not limited thereto. The image indicator 10 may be in various shapes, such as an oval, a polygon (e.g., a square, a triangle, a hexagon, etc.), a water drop shape, and a star shape.

According to an embodiment of the present disclosure, the electronic device 1000 may display the image 100 of the 3D space by fitting the 3D space (map) to the screen (display) of the electronic device 1000. For example, in order to fit the 3D space (map) to the screen, the electronic device 1000 may appropriately adjust a ratio of bounds of the 3D space (map) to bounds of a view port of a camera. In this case, the electronic device 1000 may display the entire 3D space (map) to the user at once, and thus, the user may easily grasp the entire space. In contrast, because the image of the 3D space is displayed to fit the screen based on a size of the 3D space, regardless of an actual size of the 3D space (e.g., a home) or a display size or resolution of the electronic device 1000, a size of the image indicator 10 (e.g., an icon) included in the image 100 of the 3D space may vary depending on circumstances. For example, as a size of an actual space where the user lives increases, the image indicator 10 may appear smaller, and as a size of the display of the electronic device 1000 currently used by the user decreases, the image 100 of the 3D space and the image indicator 10 may appear smaller. In addition, the size of the image indicator 10 may be displayed in a changed state, depending on the display resolution of the electronic device 1000 currently being used by the user.

Accordingly, when the user's actual living space is very large or the display size of the electronic device 1000 currently being used by the user is small, the image indicator 10 for operation or status checking may appear too small, so that when the user attempts to check or control a status of the IoT device 3000, the user may have an inconvenience of having to enlarge the image 100 of the 3D space.

In addition, when there are a plurality of electronic devices 1000 available to the user (e.g., a TV, a mobile, a tablet, a WallPad, etc.), the electronic devices 1000 may have different display sizes and resolutions. Accordingly, when the image 100 of the 3D space is initially displayed on each of the electronic devices 1000, the user may view image indicators 10 of different sizes.

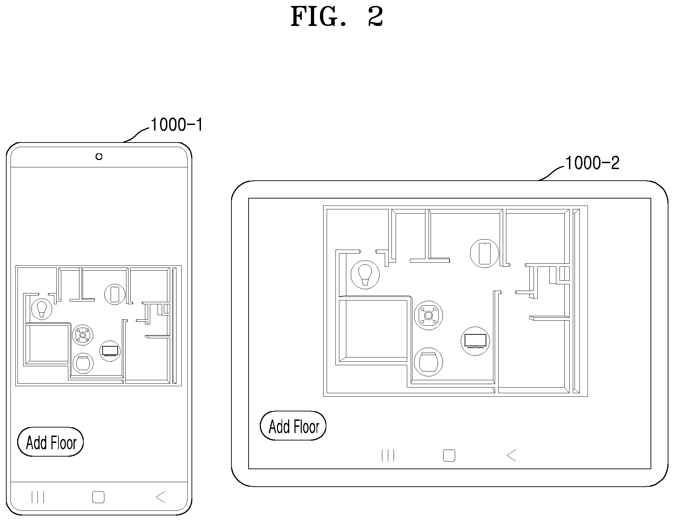

Referring to FIG. 2, for example, a display size of a first electronic device 1000-1 may be less than a display size of a second electronic device 1000-2. In this case, when the first electronic device 1000-1 and the second electronic device 1000-2 each display an image of the same 3D space by fitting the 3D space to the screen, image indicators included in the image of the 3D space displayed on the first electronic device 1000-1 may be smaller than image indicators included in the image of the 3D space displayed on the second electronic device 1000-2.

Therefore, according to an embodiment of the present disclosure, to allow each of the electronic devices 1000 to display the image indicator 10 of the same size, each of the electronic devices 1000 may adjust setting values of a camera based on a size at which the image indicator 10 is to be displayed on the screen, rather than manipulating the setting values of the camera based on the 3D space. Here, the camera may be a virtual camera for rendering a 3D space. Just as a user may view a part of the real world through the camera, the user may view a part of the 3D space through the virtual camera. Objects in the 3D space are projected onto a 2D plane of the virtual camera, and a scene of the projected 2D plane appears on the display (screen) of the electronic device 1000. Hereinafter, the camera may also be expressed as a 3D camera.

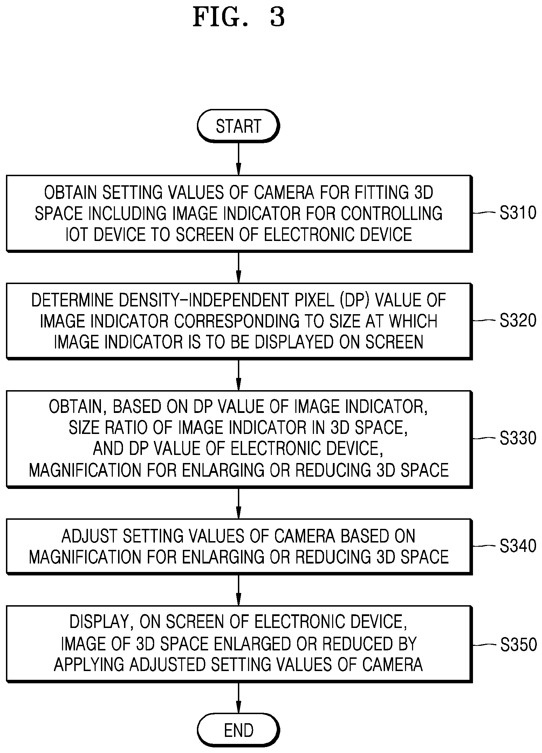

Hereinafter, a method, performed by the electronic device 1000, of providing an image of a 3D space by adjusting setting values of a camera such that the user may experience image indicators 10 of the same size across multiple devices will be described in detail with reference to FIG. 3.

FIG. 3 is a flowchart illustrating a method, performed by the electronic device 1000, of providing an image of a 3D space based on a DP value, according to an embodiment of the present disclosure.

Referring to FIG. 3, a method, performed by the electronic device 1000, of providing an image of a 3D space may include operations S310 to S350. In an embodiment of the present disclosure, operations S310 to S350 may be executed by the at least one processor included in the electronic device 1000. The method, performed by the electronic device 1000, of providing an image of a 3D space is not limited to that illustrated in FIG. 3, and in one or more embodiments, operations not illustrated in FIG. 3 may be further included or some operations may be omitted.

Operations S310 to S350 may be performed when the electronic device 1000 initially enters a 3D space or when a 3D space is reconfigured (e.g., changing the 3D space, editing the 3D space, changing a floor, etc.).

In operation S310, the electronic device 1000 according to an embodiment of the present disclosure may obtain setting values of a camera, for fitting a 3D space including an image indicator for controlling the IoT device 3000 to the screen of the electronic device 1000.

According to an embodiment of the present disclosure, the setting values of the camera may include at least one of a distance between the camera and an object in the 3D space or a field of view of the camera, but is not limited thereto. The object in the 3D space may include a floor, a bed, a desk, etc., but is not limited thereto.

According to an embodiment of the present disclosure, in order to fit the 3D space (map) to the screen, the electronic device 1000 may appropriately adjust a ratio of bounds of the 3D space (map) to bounds of a view port of the camera. In addition, the electronic device 1000 may obtain, as the setting values of the camera, a first distance between the camera and an object or a first field of view of the camera at a time point when the ratio of the bounds of the 3D space (map) to the bounds of the view port of the camera is appropriately adjusted. As the display size of the electronic device 1000 increases, the first distance between the camera and the object may decrease, and as the display size of the electronic device 1000 decreases, the first distance between the camera and the object may increase. For example, referring to FIG. 2, with respect to the same 3D space, the first distance between the camera and the object in the first electronic device 1000-1 may be greater than the first distance between the camera and the object in the second electronic device 1000-2.

In operation S320, the electronic device 1000 according to an embodiment of the present disclosure may determine a density-independent pixel (DP) value of the image indicator corresponding to a size at which the image indicator is to be displayed on the screen.

In the field of user interface design, a density-independent pixel (DP or DIP) is a virtual pixel unit that allows the size and arrangement of screen components to be specified independently, regardless of the physical display resolution of a device. A display resolution of 160 dots per inch (DPI) may be used as a standard. For example, on a 240 DPI display, 1 DP is represented as 1.5 pixels. Using DP values allows for consistent user interface design for devices having varying resolutions and sizes, regardless of the resolution of each device.

According to an embodiment of the present disclosure, the electronic device 1000 may determine, as the DP value of the image indicator (e.g., an icon), a specific ratio value of a DP value of a representative electronic device among at least one electronic device capable of providing the image of the 3D space. The at least one electronic device may include the electronic device 1000.

According to an embodiment of the present disclosure, the electronic device 1000 may obtain a DP value of each of the at least one electronic device capable of providing the image of the 3D space. For example, the electronic device 1000 may obtain DP values from other electronic devices. The electronic device 1000 may receive the DP values of the other electronic devices directly from the other electronic devices by using D2D communication, or may obtain the DP values of the other electronic devices through an edge computing device or a smart hub.

The electronic device 1000 may also obtain usage count information from other electronic devices. For example, the electronic device 1000 may obtain information about the number of times the other electronic devices have executed a specific application and displayed an image of the 3D space including the image indicator.

According to an embodiment of the present disclosure, the electronic device 1000 may select a representative electronic device from among the at least one electronic device. For example, the electronic device 1000 may select the representative electronic device based on usage count information of each of the at least one electronic device. That is, the electronic device 1000 may select, as the representative electronic device, an electronic device that has displayed an image of the 3D space including the image indicator the greatest number of times. Alternatively, the electronic device 1000 may select, as the representative electronic device, an electronic device separately designated by the user. For example, the electronic device 1000 may select, as the representative electronic device, a smartphone designated by the user as the representative electronic device.

According to an embodiment of the present disclosure, the electronic device 1000 may determine a specific ratio value (e.g., 10 %) of the DP value of the representative electronic device as the DP value of the image indicator. For example, when the DP value of the representative electronic device is 200 DP, the DP value of the image indicator may be determined to be 20 DP (=200*1/10). The specific ratio value (e.g. 10 %) of the DP value of the representative electronic device may be preset, and may also be changed by the user. For example, 1/10 of the DP value of the representative electronic device may be determined as a default DP value of the image indicator, but when the user desires to view the image indicator at a larger size on the screen, 1/10 may be changed to 1/7.

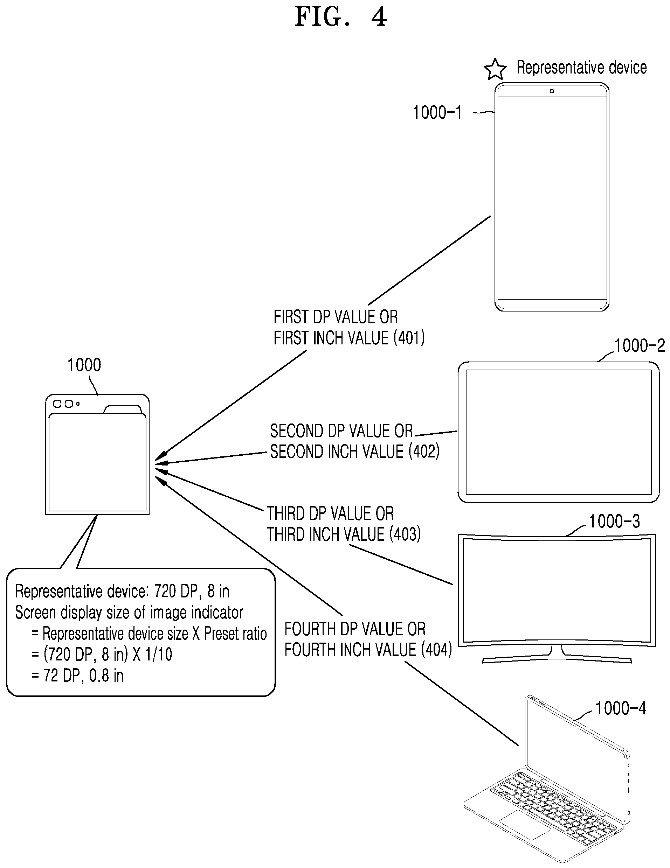

An operation, performed by the electronic device 1000, of determining a DP value of an image indicator will be described in more detail with reference to FIG. 4.

FIG. 4 is a diagram illustrating an operation, performed by the electronic device 1000, of determining a screen display size of a representative electronic device and an image indicator, according to an embodiment of the present disclosure. FIG. 4 illustrates an example in which the user further owns, in addition to the electronic device 1000 currently being used, the first electronic device 1000-1, the second electronic device 1000-2, a third electronic device 1000-3, and a fourth electronic device 1000-4.

Referring to FIG. 4, the electronic device 1000 may receive (401), from the first electronic device 1000-1, a first DP value or a first inch value of the first electronic device 1000-1, may receive (402), from the second electronic device 1000-2, a second DP value or a second inch value of the second electronic device 1000-2, may receive (403), from the third electronic device 1000-3, a third DP value or a third inch value of the third third electronic device 1000-3, and may receive (404), from the fourth electronic device 1000-4, a fourth DP value or a fourth inch value of the fourth electronic device 1000-4.

In addition, the electronic device 1000 may obtain usage count information of the first electronic device 1000-1, usage count information of the second electronic device 1000-2, usage count information of the third electronic device 1000-3, and the usage count information of the fourth electronic device 1000-4. The electronic device 1000 may receive the usage count information directly from each of the electronic devices, or may receive the usage count information from an edge computing device, a smart hub, or the server 2000.

As a result of comparing the pieces of usage count information of the respective electronic devices, when the first electronic device 1000-1 has the greatest number of uses, the electronic device 1000 may select the first electronic device 1000-1 as the representative electronic device. In this case, the first DP value of the first electronic device 1000-1 may be 720 DP, and the first inch value thereof may be 8 inches.

The electronic device 1000 may determine a screen display size (DP value or inch value) of the image indicator by using the DP value (or inch value) of the representative electronic device. For example, the electronic device 1000 may determine 72 DP (or 0.8 inches), which is a preset ratio (1/10) of the DP value (or inch value) of the first electronic device 1000-1 as the representative electronic device, as the screen display size of the image indicator.

According to an embodiment of the present disclosure, each of the first electronic device 1000-1, the second electronic device 1000-2, the third electronic device 1000-3, and the fourth electronic device 1000-4 may determine the screen display size (DP value or inch value) of the image indicator by using the DP value (or inch value) of the representative electronic device. For example, each of the first electronic device 1000-1, the second electronic device 1000-2, the third electronic device 1000-3, and the fourth electronic device 1000-4 may select the first electronic device 1000-1 with the greatest number of uses as the representative electronic device, and 72 DP (or 0.8 inches), which is the preset ratio (1/10) of the DP value (or inch value) of the first electronic device 1000-1, may be determined as the screen display size of the image indicator. Accordingly, the image indicator is to be displayed at a size of 72 DP (or 0.8 inches) on all of the electronic devices 1000, 1000-1, 1000-2, 1000-3, and 1000-4 owned by the user.

Meanwhile, although not shown in FIG. 4, according to an embodiment of the present disclosure, when the screen display size of the image indicator is determined to be 72 DP (or 0.8 inches), which is the preset ratio (1/10) of the DP value (or inch value) of the first electronic device 1000-1 as the representative electronic device, the electronic device 1000 may transmit, to the first electronic device 1000-1, the second electronic device 1000-2, the third electronic device 1000-3, and the fourth electronic device 1000-4, information indicating that the screen display size of the image indicator is 72 DP (or 0.8 inches).

Referring back to FIG. 3, in operation S330, the electronic device 1000 according to an embodiment of the present disclosure may obtain, based on the DP value of the image indicator, a size ratio of the image indicator in the 3D space, and a DP value of the electronic device 1000, a magnification for enlarging or reducing the 3D space.

For example, the electronic device 1000 may calculate the magnification for enlarging or reducing the 3D space as in Equation 1.

<Equation 1>

$$\text{Magnification} = \frac{\text{DP value of image indicator}}{\text{DP value of electronic device} \ast \text{Size ratio of image indicator in 3D space}}$$

That is, the magnification for enlarging or reducing the 3D space may be a value obtained by dividing the DP value of the image indicator obtained in operation S320 by the product of the DP value of the electronic device 1000 and the size ratio of the image indicator in the 3D space.

Here, the size ratio of the image indicator in the 3D space may be defined as in Equation 2. That is, the size ratio of the image indicator in the 3D space may be a value obtained by dividing the size of the image indicator by the size of the 3D space. The size of the image indicator may be defined as a virtual unit value in the 3D space.

<Equation 2>

$$\text{Size ratio of image indicator in 3D space} = \frac{\text{Size of image indicator}}{\text{Size of 3D space}}$$

$$= \frac{\text{Size of image indicator}}{\text{Distance between camera and object*Tan(FoV)*2}}$$

Meanwhile, the size of the 3D space may be a value obtained by multiplying, by Tan(FoV), a distance between the camera and an object among the setting values of the camera obtained in operation S310, and then further multiplying the result by 2. The size of the 3D space may be one of a vertical length, a horizontal length, or a diagonal length of a bounding box defining the 3D space, but is not limited thereto.

Accordingly, Equation 1 for obtaining the magnification for enlarging or reducing the 3D space may be rearranged as in Equation 3. According to Equation 3, the magnification for enlarging or reducing the 3D space may increase as the DP value of the electronic device 1000 decreases or the size of the 3D space (distance between camera and object*Tan(FoV) *2) increases.

<Equation 3>

$$\text{Magnification} = \frac{\text{DP value of image indicator}}{\text{DP value of electronic device}*\{\frac{\text{Size of image indicator}}{\text{Distance between camera and object*Tan(FoV)*2}}\}}$$

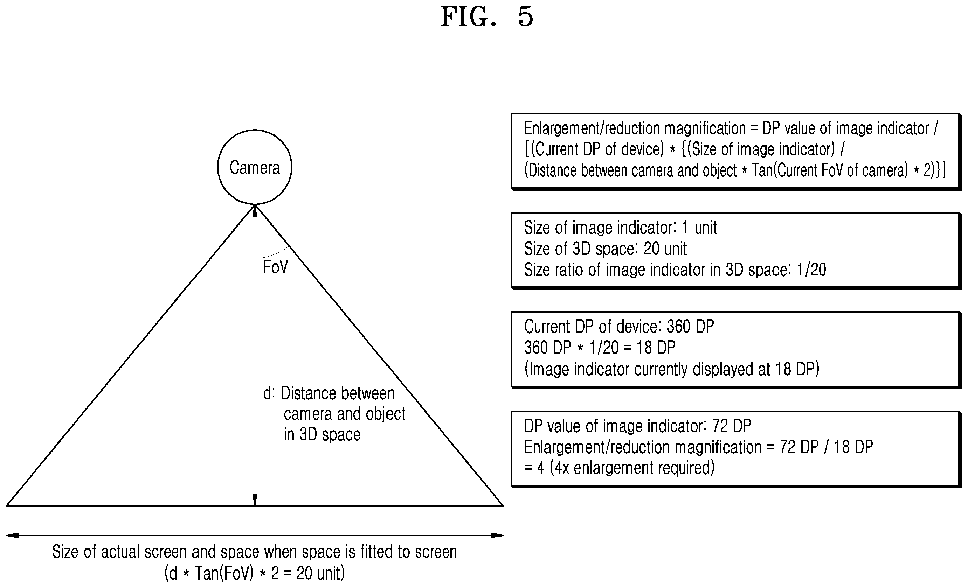

According to an embodiment of the present disclosure, the electronic device 1000 may obtain, from the server 2000, size information of the image indicator for applying to Equation 3. The electronic device 1000 may determine the size of the 3D space based on the distance between the camera and the object among the setting values of the camera obtained in operation S310. In addition, the electronic device 1000 may determine the size ratio of the image indicator in the 3D space, based on the size of the 3D space and the size information of the image indicator obtained from the server 2000. Referring to FIG. 5, a specific example of an operation, performed by the electronic device 1000, of determining a size ratio of an image indicator in a 3D space will be described.

Referring to FIG. 5, when the 3D space is fitted to the screen of the electronic device 1000, the size of the 3D space may be 20 units (=d*Tan(FoV)*2), and the size of the image indicator in the 3D space obtained from the server 2000 may be 1 unit. Accordingly, the size ratio of the image indicator in the 3D space may be 1/20.

Finally, the electronic device 1000 may determine the magnification for enlarging or reducing the 3D space by dividing the DP value of the image indicator (e.g., 72 DP) determined in operation S320 by the product of the size ratio of the image indicator in the 3D space (e.g., 1/20) and the DP value of the electronic device 1000 (e.g., 360 DP).

For example, when the DP value of the electronic device 1000 is 360 DP, the product of the DP value of the electronic device 1000 and the size ratio of the image indicator in the 3D space may be 18 DP. That is, based on the current setting values of the camera, the image indicator may be displayed at 18 DP on the screen of the electronic device 1000. However, when the DP value of the image indicator calculated in operation S320 is 72 DP, the image indicator is to be displayed at a size of 72 DP. Accordingly, when 72 DP is divided by 18 DP, the image of the 3D space is to be enlarged by a factor of four.

Referring to back FIG. 3, in operation S340, the electronic device 1000 according to an embodiment of the present disclosure may adjust the setting values of the camera obtained in operation S310, based on the magnification for enlarging or reducing the 3D space.

According to an embodiment of the present disclosure, at least one of a distance between the camera and an object in the 3D space or a field of view of the camera may be adjusted, based on the magnification for enlarging or reducing the 3D space. For example, when the 3D space is determined to be enlarged by a factor of four to allow the image indicator to be displayed at a size corresponding to the DP value of the image indicator determined in operation S320, the electronic device 1000 may adjust a camera distance such that the distance between the camera and the object in the 3D space is reduced to 1/4. Alternatively, the electronic device 1000 may move the camera closer to the object such that the distance between the camera and the object is reduced to 1/5, and may adjust the field of view of the camera to be increased such that the 3D space is enlarged by a factor of four. Alternatively, the electronic device 1000 may adjust the field of view of the camera to be reduced such that the 3D space is enlarged by a factor of four. According to an embodiment of the present disclosure, the electronic device 1000 may adjust a focal length of the camera to adjust the field of view of the camera. For example, the electronic device 1000 may adjust the field of view to be narrow by increasing the focal length, or may adjust the field of view to be wide by decreasing the focal length.

Meanwhile, when the field of view of the camera is adjusted, distortion may occur in the image of the 3D space, and thus, the electronic device 1000 may apply a distortion correction algorithm.

According to an embodiment of the present disclosure, when the magnification for enlarging or reducing the 3D space obtained in operation S330 is 1, the electronic device 1000 may maintain the setting values of the camera in the current state.

In operation S350, the electronic device 1000 according to an embodiment of the present disclosure may display, on the screen of the electronic device 1000, an image of the 3D space enlarged or reduced by applying the adjusted setting values of the camera.

According to an embodiment of the present disclosure, when the electronic device 1000 applies the adjusted setting values of the camera, the size of the image indicator included in the image of the 3D space displayed on the screen of the electronic device 1000 may have the DP value determined in S320. That is, according to an embodiment of the present disclosure, the electronic device 1000 may adjust the setting values of the camera such that image indicators of the same size are displayed across all devices owned by the user.

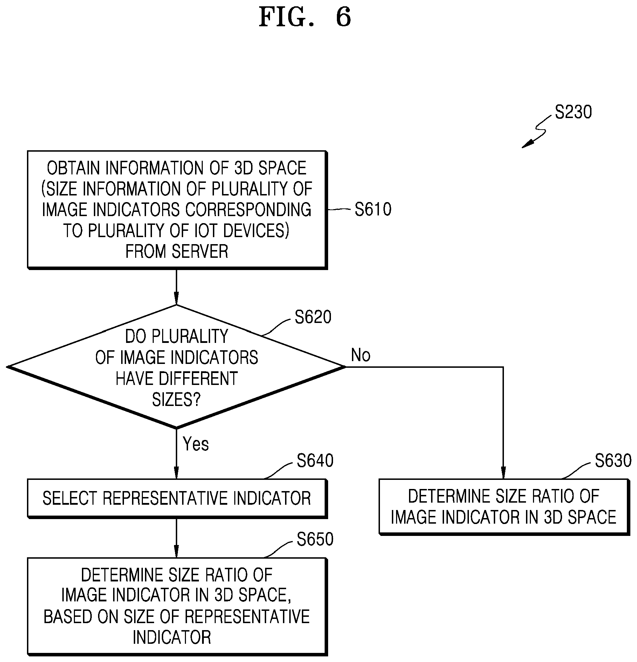

Meanwhile, when a plurality of image indicators corresponding to a plurality of IoT devices in the 3D space have different sizes, the electronic device 1000 may select a representative indicator to determine the size ratio of the image indicator in the 3D space, and may determine the size ratio of the image indicator in the 3D space by using the size of the representative indicator. Referring to FIG. 6, an operation, performed by the electronic device 1000, of selecting a representative indicator will be described.

FIG. 6 is a flowchart illustrating a method, performed by the electronic device 1000, of selecting a representative indicator, according to an embodiment of the present disclosure.

In operation S610, the electronic device 1000 according to an embodiment of the present disclosure may obtain information of the 3D space from the server 2000. For example, the electronic device 1000 may obtain, from the server 2000, size information of the plurality of image indicators corresponding to the plurality of IoT devices. In addition, the electronic device 1000 may obtain control count information of the plurality of IoT devices from the server 2000. The control count information of the plurality of IoT devices may be information regarding the number of times each IoT device has been controlled by the user.

In operation S620, the electronic device 1000 according to an embodiment of the present disclosure may determine, based on the size information of the plurality of image indicators obtained from the server 2000, whether the plurality of image indicators have different sizes.

For example, when a first image indicator, a second image indicator, and a third image indicator have a size of 2 units, a fourth image indicator and a fifth image indicator have a size of 1.5 units, and a sixth image indicator and a seventh image indicator have a size of 1 unit, the electronic device 1000 may determine that the plurality of image indicators have different sizes. In contrast, when all of the first image indicator to the seventh image indicator have a size of 1 unit, the electronic device 1000 may determine that the plurality of image indicators do not have different sizes.

In operation S630, when all of the plurality of image indicators have the same size (No in S620), the electronic device 1000 according to an embodiment of the present disclosure may determine the size ratio of the image indicator in the 3D space by using the size of the image indicator and the size of the 3D space.

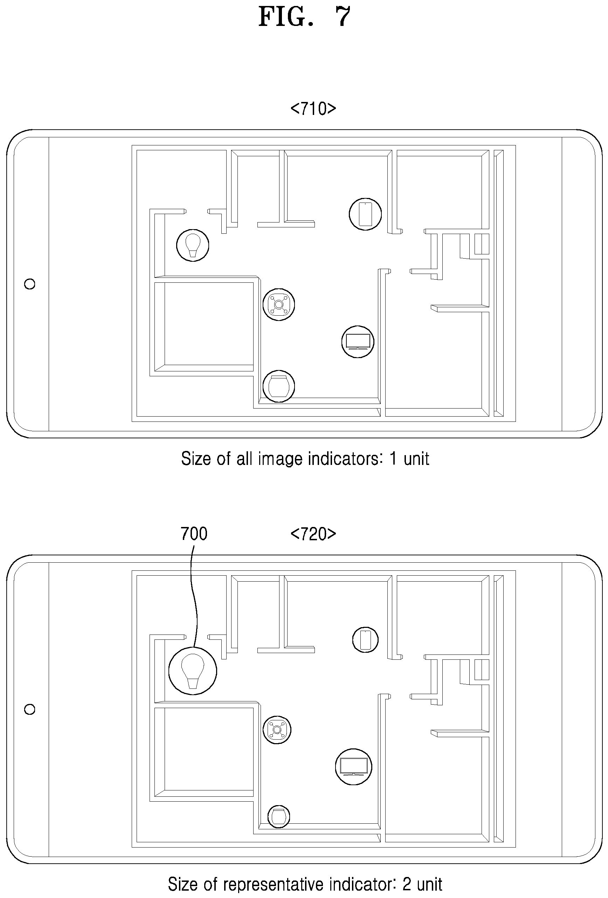

Referring to 710 of FIG. 7, for example, when the size of all image indicators included in the 3D space is 1 unit and the size of the 3D space is 20 units, the electronic device 1000 may determine the size ratio of the image indicator in the 3D space to be 1/20.

In operation S640, when the plurality of image indicators have different sizes (Yes in S620), the electronic device 1000 according to an embodiment of the present disclosure may select a representative indicator from among the plurality of image indicators. In operation S650, the electronic device 1000 according to an embodiment of the present disclosure may determine the size ratio of the image indicator in the 3D space, based on the size of the representative indicator.

According to an embodiment of the present disclosure, the electronic device 1000 may select, as the representative indicator, the first image indicator corresponding to a first IoT device among the plurality of IoT devices, based on the control count information of the plurality of IoT devices. For example, referring to 720 of FIG. 7, when the user has controlled a lighting device among the plurality of IoT devices most frequently, the electronic device 1000 may select, as the representative indicator, a first image indicator 700 corresponding to the lighting device among the plurality of IoT devices. The first image indicator 700 may include a UI component for displaying a status of the lighting device or controlling an operation of the lighting device. When the size of the first image indicator 700 is 2 units and the size of the 3D space is 20 units, the electronic device 1000 may determine the size ratio of the image indicator in the 3D space to be 1/10.

According to an embodiment of the present disclosure, the electronic device 1000 may select, as the representative indicator, the first image indicator corresponding to the first IoT device designated by the user. For example, the user may designate an image indicator of a robot vacuum cleaner as the representative indicator. When the size of the image indicator of the robot vacuum cleaner is 1 unit and the size of the 3D space is 20 units, the electronic device 1000 may determine the size ratio of the image indicator in the 3D space to be 1/20.

According to an embodiment of the present disclosure, the size ratio of the image indicator in the 3D space may be determined by using the average size of image indicators corresponding to the plurality of IoT devices. For example, when the average size of the image indicators is 1.5 units and the size of the 3D space is 20 units, the electronic device 1000 may determine the size ratio of the image indicator in the 3D space to be 1.5/20.

According to an embodiment of the present disclosure, when the size ratio of the image indicator in the 3D space is determined, the electronic device 1000 may determine the magnification for enlarging or reducing the 3D space by using Equation 1 above. For example, when the size of the representative indicator is 2 units, the size of the 3D space is 20 units, the DP value of the image indicator is 72 DP, and the DP value of the electronic device 1000 is 360 DP, the enlargement magnification may be 2.

$$\text{Magnification} = \frac{\text{DP value of image indicator}}{\text{DP value of electronic device} \ast \text{Size ratio of image indicator in 3D space}}$$

$$= \frac{72 \text{ DP}}{360 \text{ DP} \ast \{\frac{2 \text{ unit}}{20 \text{ unit}}\}} = 2$$

Accordingly, the electronic device 1000 may adjust the distance between the camera and the object or the field of view of the camera to enlarge the 3D space by a factor of two.

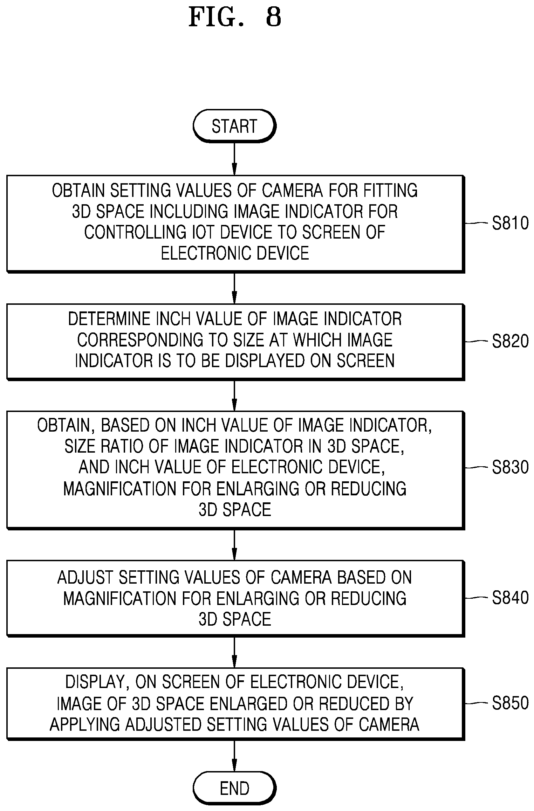

Meanwhile, according to an embodiment of the present disclosure, the electronic device 1000 may determine the magnification for enlarging or reducing the 3D space by using an inch value instead of a DP value. A method, performed by the electronic device 1000, of adjusting setting values of a camera based on an inch value of an image indicator and an inch value of the electronic device 1000 will be described in detail with reference to FIG. 8.

FIG. 8 is a flowchart illustrating a method, performed by the electronic device 1000, of providing an image of a 3D space based on an inch value, according to an embodiment of the present disclosure.

Referring to FIG. 8, a method, performed by the electronic device 1000, of providing an image of a 3D space may include operations S810 to S850. In an embodiment of the present disclosure, operations S810 to S850 may be executed by the at least one processor included in the electronic device 1000. The method, performed by the electronic device 1000, of providing an image of a 3D space is not limited to that illustrated in FIG. 8, and in one or more embodiments, operations not illustrated in FIG. 8 may be further included or some operations may be omitted.

In operation S810, the electronic device 1000 according to an embodiment of the present disclosure may obtain setting values of a camera, for fitting a 3D space including an image indicator for controlling the IoT device 3000 to the screen of the electronic device 1000.

According to an embodiment of the present disclosure, in order to fit the 3D space (map) to the screen, the electronic device 1000 may appropriately adjust a ratio of bounds of the 3D space (map) to bounds of a view port of the camera. In addition, the electronic device 1000 may obtain, as the setting values of the camera, a first distance between the camera and an object or a first field of view of the camera at a time point when the ratio of the bounds of the 3D space (map) to the bounds of the view port of the camera is appropriately adjusted.

Operation S810 corresponds to operation S310 of FIG. 3, and thus, redundant descriptions thereof will be omitted.

In operation S820, the electronic device 1000 according to an embodiment of the present disclosure may determine an inch value of the image indicator corresponding to a size at which the image indicator is to be displayed on the screen.

According to an embodiment of the present disclosure, the electronic device 1000 may determine, as the inch value of the image indicator (e.g., an icon), a specific ratio value of an inch value of a representative electronic device among at least one electronic device capable of providing the image of the 3D space. The at least one electronic device may include the electronic device 1000.

According to an embodiment of the present disclosure, the electronic device 1000 may obtain an inch value of each of the at least one electronic device capable of providing the image of the 3D space. For example, the electronic device 1000 may obtain inch values of the display from other electronic devices. The electronic device 1000 may receive the inch values of the other electronic devices directly from the other electronic devices by using D2D communication, or may obtain the inch values of the other electronic devices through an edge computing device or a smart hub.

The electronic device 1000 may also obtain usage count information from the other electronic devices. For example, the electronic device 1000 may obtain information about the number of times the other electronic devices have executed a specific application and displayed an image of the 3D space including the image indicator.

According to an embodiment of the present disclosure, the electronic device 1000 may select a representative electronic device from among the at least one electronic device. For example, the electronic device 1000 may select the representative electronic device based on usage count information of each of the at least one electronic device. That is, the electronic device 1000 may select, as the representative electronic device, an electronic device that has displayed an image of the 3D space including the image indicator the greatest number of times. Alternatively, the electronic device 1000 may select, as the representative electronic device, an electronic device separately designated by the user. For example, the electronic device 1000 may select, as the representative electronic device, a smartphone designated by the user as the representative electronic device.

According to an embodiment of the present disclosure, the electronic device 1000 may determine a specific ratio value (e.g., 10 %) of the inch value of the representative electronic device as the inch value of the image indicator. For example, referring to FIG. 4, when the inch value of the representative electronic device is 8 inches, the inch value of the image indicator may be determined to be 0.8 inches (=8*1/10). Here, the specific ratio value (e.g. 10 %) may be preset, and may also be changed by the user. For example, 1/10 of the inch value of the representative electronic device may be determined as a default inch value of the image indicator, but when the user desires to view the image indicator at a larger size on the screen, 1/10 may be changed to 1/5.

In operation S830, the electronic device 1000 according to an embodiment of the present disclosure may obtain, based on the inch value of the image indicator, a size ratio of the image indicator in the 3D space, and an inch value of the electronic device 1000, a magnification for enlarging or reducing the 3D space.

For example, the electronic device 1000 may calculate the magnification for enlarging or reducing the 3D space as follows.

<Equation 4>

$$\text{Magnification} = \frac{\text{Inch value of image indicator}}{\text{Inch value of electronic device} * \text{Size ratio of image indicator in 3D space}}$$

That is, the magnification for enlarging or reducing the 3D space may be a value obtained by dividing the inch value of the image indicator obtained in operation S820 by the product of the inch value of the electronic device 1000 and the size ratio of the image indicator in the 3D space.

Here, the size ratio of the image indicator in the 3D space may be defined as in Equation 5. That is, the size ratio of the image indicator in the 3D space may be a value obtained by dividing the size of the image indicator by the size of the 3D space. The size of the image indicator may be defined as a virtual unit value in the 3D space.

<Equation 5>

$$\text{Size ratio of image indicator in 3D space} = \frac{\text{Size of image indicator}}{\text{Size of 3D space}}$$

$$= \frac{\text{Size of image indicator}}{\text{Distance between camera and object} * \text{Tan(FoV)} * 2}$$

Meanwhile, the size of the 3D space may be a value obtained by multiplying, by Tan(FoV), a distance between the camera and an object among the setting values of the camera obtained in operation S810, and then further multiplying the result by 2. The size of the 3D space may be one of a vertical length, a horizontal length, or a diagonal length of a bounding box defining the 3D space, but is not limited thereto.

Accordingly, the equation for obtaining the magnification for enlarging or reducing the 3D space may be rearranged as in Equation 6. According to Equation 6, the magnification for enlarging or reducing the 3D space may increase as the inch value of the electronic device 1000 decreases or the size of the 3D space (distance between camera and object*Tan(FoV)*2) increases.

<Equation 6>

$$\text{Magnification} = \frac{\text{Inch value of image indicator}}{\text{Inch value of electronic device} * \left\{ \frac{\text{Size of image indicator}}{\text{Distance between camera and object} * \text{Tan(FoV)} * 2} \right\}}$$

According to an embodiment of the present disclosure, the electronic device 1000 may obtain, from the server 2000, size information of the image indicator for applying to Equation 6. The electronic device 1000 may determine the size of the 3D space based on the distance between the camera and the object among the setting values of the camera obtained in operation S810. In addition, the electronic device 1000 may determine the size ratio of the image indicator in the 3D space, based on the size of the 3D space and the size information of the image indicator obtained from the server 2000.

For example, referring to FIG. 5, when the 3D space is fitted to the screen of the electronic device 1000, the size of the 3D space may be 20 units (=d*Tan(FoV)*2), and the size of the image indicator in the 3D space obtained from the server 2000 may be 1 unit. Accordingly, the size ratio of the image indicator in the 3D space may be 1/20.

Finally, the electronic device 1000 may determine the magnification for enlarging or reducing the 3D space by dividing the inch value of the image indicator (e.g., 0.8) determined in operation S820 by the product of the size ratio of the image indicator in the 3D space (e.g., 1/20) and the inch value of the electronic device 1000 (e.g., 8).

For example, when the inch value of the electronic device 1000 is 4 inches, the product of the inch value of the electronic device 1000 (e.g., 4 inches) and the size ratio of the image indicator in the 3D space (e.g., 1/20) may be 0.2 inches. That is, based on the current setting values of the camera, the image indicator may be displayed at 0.2 inches on the screen of the electronic device 1000. However, when the inch value of the image indicator calculated in operation S820 is 0.8 inches, the image indicator is to be displayed at a size of 0.8 inches. Accordingly, when 0.8 is divided by 0.2, the image of the 3D space is to be enlarged by a factor of four.

In operation S840, the electronic device 1000 according to an embodiment of the present disclosure may adjust the setting values of the camera obtained in operation S810, based on the magnification for enlarging or reducing the 3D space.

According to an embodiment of the present disclosure, the electronic device 1000 may adjust at least one of a distance between the camera and an object in the 3D space or a field of view of the camera, based on the magnification for enlarging or reducing the 3D space. For example, among the camera setting values obtained in operation S810, the electronic device 1000 may change the first distance between the camera and the object to a second distance, or may change the first field of view of the camera to the second field of view.

Meanwhile, according to an embodiment of the present disclosure, when the magnification for enlarging or reducing the 3D space obtained in operation S830 is 1, the electronic device 1000 may maintain the setting values of the camera in the current state.

Operation S840 corresponds to operation S340 of FIG. 3, and thus, redundant descriptions thereof will be omitted.

In operation S850, the electronic device 1000 according to an embodiment of the present disclosure may display, on the screen of the electronic device 1000, an image of the 3D space enlarged or reduced by applying the adjusted setting values of the camera.

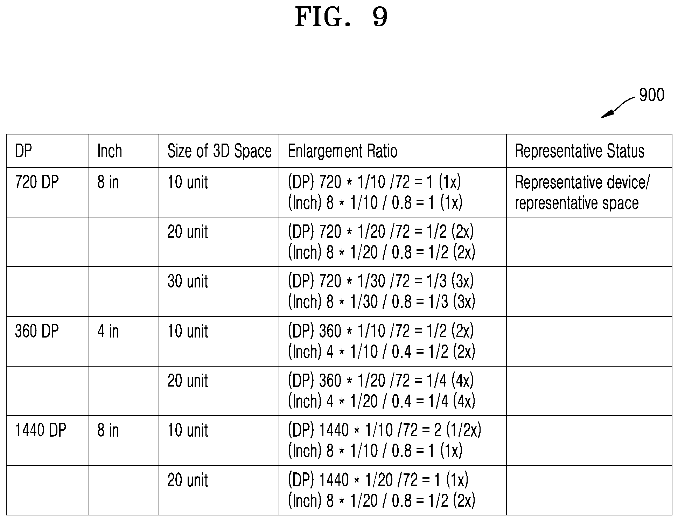

According to an embodiment of the present disclosure, when the electronic device 1000 applies the adjusted setting values of the camera, the size of the image indicator included in the image of the 3D space displayed on the screen of the electronic device 1000 may have the inch value determined in S820. That is, according to an embodiment of the present disclosure, the electronic device 1000 may adjust the setting values of the camera such that image indicators of the same size are displayed across all devices owned by the user. Hereinafter, with reference to FIG. 9, an operation of determining an enlargement ratio such that image indicators of the same size are displayed across all devices owned by the user will be described.

FIG. 9 is a diagram illustrating an operation of determining an enlargement ratio in each of various electronic devices, according to an embodiment of the present disclosure. FIG. 9 illustrates an example in which a size at which an image indicator is to be displayed on a screen is 72 DP and 0.8 inches. In addition, FIG. 9 illustrates an example in which a DP value of a representative electronic device is 720 DP, an inch value of a representative electronic device is 8 inches, a size of a representative space is 10 units (e.g., 30 pyeong), and a size of an image indicator in a 3D space is 1 unit.

Referring to Table 900, when the electronic device 1000 currently used by the user has a DP value of 720 DP and an inch value of 8 inches, and the 3D space has a size of 10 units, the enlargement ratio may be 1x. That is, even when the current setting values of the camera are maintained, the electronic device 1000 may display to the user an image indicator of a size of 72 DP and 0.8 inches. In contrast, when the electronic device 1000 currently used by the user has a DP value of 720 DP and an inch value of 8 inches, and the 3D space has a size of 20 units, the enlargement ratio may be 2x. That is, when the 3D space is enlarged by a factor of two, the size of the image indicator displayed to the user may become 72 DP and 0.8 inches. Accordingly, the electronic device 1000 may reduce a distance between the camera and an object by half such that the 3D space including the image indicator may be displayed to be enlarged by a factor of two. Meanwhile, when the electronic device 1000 currently used by the user has a DP value of 720 DP and an inch value of 8 inches, and the 3D space has a size of 30 units, the enlargement ratio may be 3x. That is, when the 3D space is enlarged by a factor of three, the size of the image indicator displayed to the user may become 72 DP and 0.8 inches. Accordingly, the electronic device 1000 may reduce the distance between the camera and the object to 1/3 such that the 3D space including the image indicator may be displayed to be enlarged by a factor of three. In conclusion, according to an embodiment of the present disclosure, the electronic device 1000 may determine the enlargement ratio to be higher as the size of the 3D space increases.

When the electronic device 1000 currently used by the user has a DP value of 360 DP and an inch value of 4 inches, and the 3D space has a size of 10 units, the enlargement ratio may be 2x. When the electronic device 1000 currently used by the user has a DP value of 360 DP and an inch value of 4 inches, and the 3D space has a size of 20 units, the enlargement ratio may be 4x. That is, in a case where the DP value of the electronic device 1000 is reduced from 720 DP to 360 DP, when the size of the 3D space remains the same, the enlargement ratio may be determined to be greater. In conclusion, even when the size of the 3D space remains the same, the electronic device 1000 may determine the enlargement ratio to be higher as the display size of the electronic device 1000 decreases.

Meanwhile, an enlargement ratio calculated based on a DP value may be different from an enlargement ratio calculated based on an inch value. For example, when the DP value of the electronic device 1000 is 1440 DP, the inch value of the electronic device 1000 is 8 inches, and the size of the 3D space is 10 units, the enlargement ratio may be 1/2x when calculated based on the DP value, and may be 1x when calculated based on the inch value. In this case, according to a preset policy, the electronic device 1000 may apply the enlargement ratio calculated based on the DP value, or may apply the enlargement ratio calculated based on the inch value.

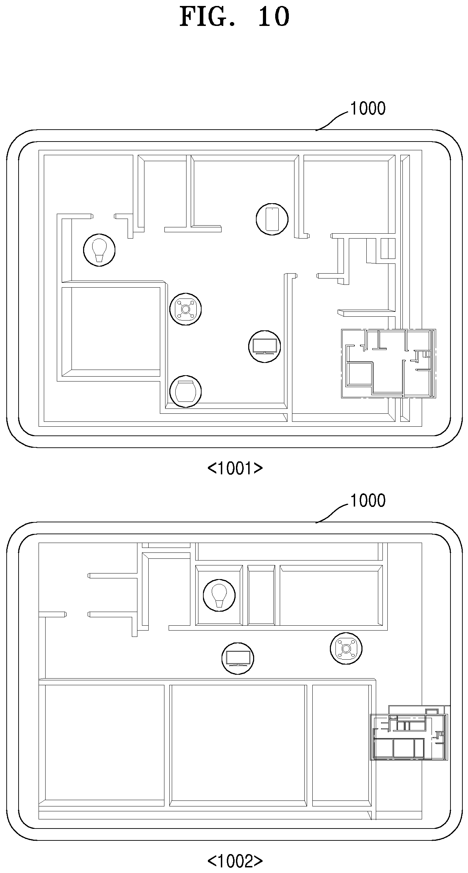

Hereinafter, with reference to FIGS. 10 to 11B, an example in which the electronic device 1000 provides an image of a 3D space will be described.

FIG. 10 is a diagram illustrating an operation, performed by the electronic device 1000, of providing images of 3D spaces of different sizes, according to an embodiment of the present disclosure.

Referring to FIG. 10, the electronic device 1000 may display an image 1001 of a first 3D space and an image 1002 of a second 3D space. In this case, the second 3D space may have a greater area than the first 3D space. For example, the first 3D space may be a 30-pyeong apartment space, and the second 3D space may be a 50-pyeong apartment space.

The electronic device 1000 may display the second 3D space in a more enlarged manner than the first 3D space such that first image indicators included in the image 1001 of the first 3D space have the same screen display size as second indicators included in the image 1002 of the second 3D space. That is, the electronic device 1000 may adjust the setting values of the camera such that a size of an image indicator displayed to the user remains the same even when actual spaces differ.

Therefore, according to an embodiment of the present disclosure, the user may experience a consistent user interface because the size of the image indicator for controlling the IoT device 3000 remains the same even when the 3D space changes.

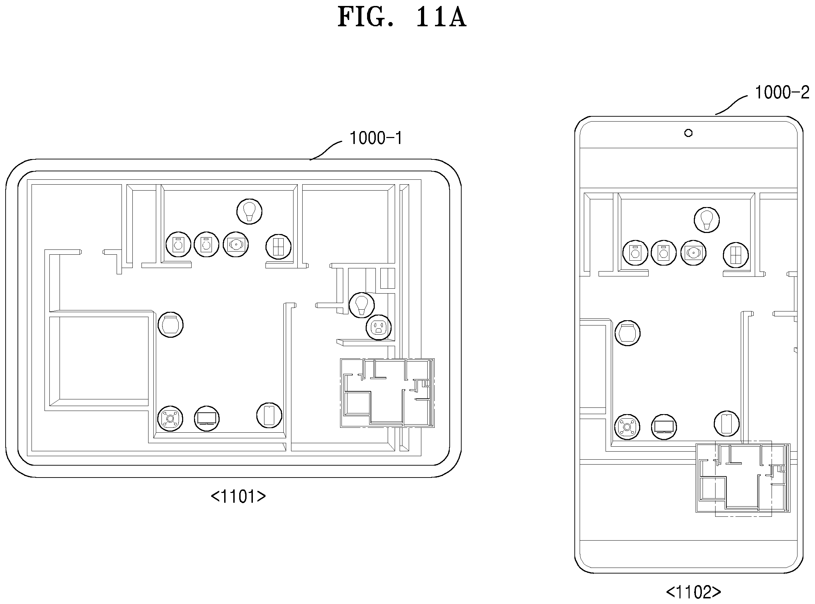

FIG. 11A is a diagram illustrating an operation of providing images of a 3D space in electronic devices with different display sizes, according to an embodiment of the present disclosure.

Referring to FIG. 11A, the first electronic device 1000-1 and the second electronic device 1000-2 may display images of the same 3D space. In this case, the first electronic device 1000-1 and the second electronic device 1000-2 may have different display sizes and resolutions. Accordingly, when the 3D space is fitted to the screen, image indicators displayed on the first electronic device 1000-1 and the second electronic device 1000-2 may have different sizes, and thus, the first electronic device 1000-1 and the second electronic device 1000-2 may each adjust the setting values of the camera to display image indicators of the same size. For example, because a display size of the second electronic device 1000-2 is smaller than that of the first electronic device 1000-1, the second electronic device 1000-2 may display the 3D space in a more enlarged manner than the first electronic device 1000-1. In this case, a size of image indicators included in an image 1101 of the 3D space provided by the first electronic device 1000-1 may be the same as a size of image indicators included in an image 1102 of the 3D space provided by the second electronic device 1000-2.

Therefore, according to an embodiment of the present disclosure, the user may view an image indicator of the same size on any of the electronic devices 1000, and thus, the user may operate the image indicator in a familiar manner on any of the electronic devices 1000, without having to additionally adjust the size of the image indicator.

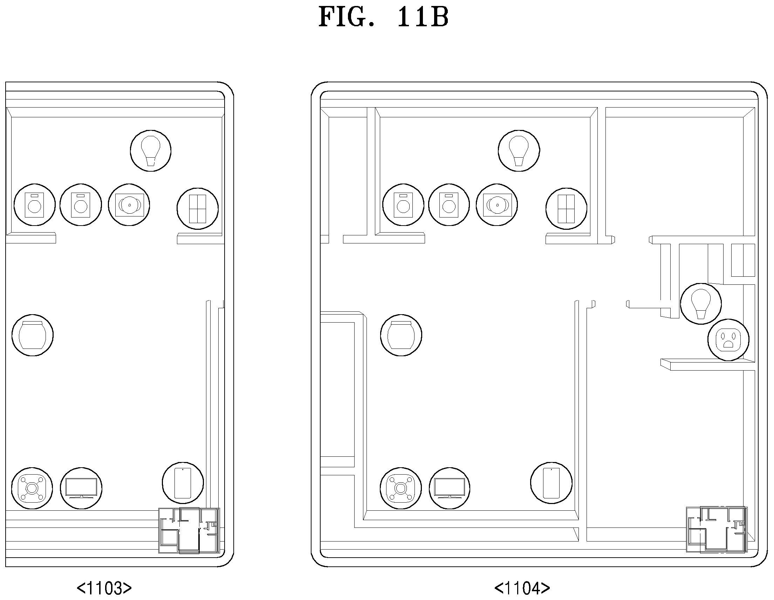

FIG. 11B is a diagram illustrating an operation of providing an image of a 3D space in the electronic device 1000 including a foldable display, according to an embodiment of the present disclosure.

Referring to 1103 of FIG. 11B, when the electronic device 1000 is folded in half, the DP value of the electronic device 1000 may be 720 DP. In contrast, referring to 1104 of FIG. 11B, when the electronic device 1000 is fully unfolded, the DP value of the electronic device 1000 may be 1440 DP (= 720 DP * 2).

Accordingly, the electronic device 1000 may, when folded in half, adjust the setting values of the camera by determining the magnification for enlarging or reducing the 3D space based on 720 DP, and, when fully unfolded, adjust the setting values of the camera by determining the magnification for enlarging or reducing the 3D space based on 1440 DP.

According to an embodiment of the present disclosure, even when the electronic device 1000 is folded in half and then fully unfolded or is fully unfolded and then folded in half, while the image of the 3D space is displayed, a size of an indicator included in the image of the 3D space may be maintained the same.

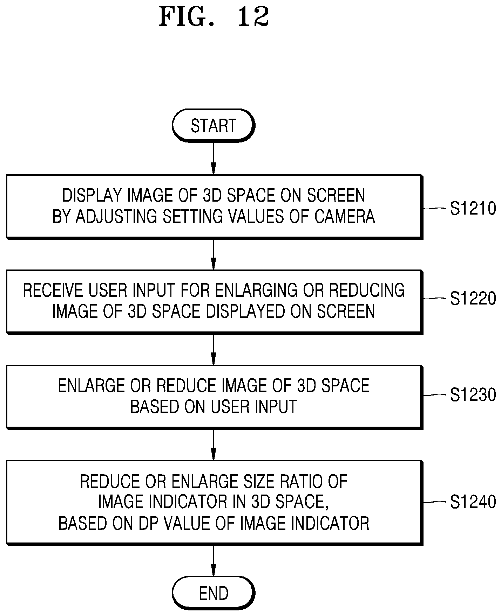

FIG. 12 is a flowchart illustrating a method, performed by the electronic device 1000, of reducing or enlarging a size ratio of an image indicator in a 3D space, according to an embodiment of the present disclosure.

In operation S1210, the electronic device 1000 according to an embodiment of the present disclosure may display an image of a 3D space on a screen by adjusting setting values of a camera. For example, the electronic device 1000 may determine a DP value (or inch value) of an image indicator corresponding to the size at which the image indicator is to be displayed on the screen. The electronic device 1000 may determine, based on the DP value (or inch value) of the image indicator, a size ratio of the image indicator in the 3D space, and a DP value (or inch value) of the electronic device 1000, a magnification for enlarging or reducing the 3D space. The electronic device 1000 may display the image of the 3D space on the screen by adjusting the setting values of the camera in the 3D space according to the determined magnification. In this case, the electronic device 1000 may display an image indicator of a preset size.

Operation S1210 corresponds to operation S350 of FIG. 3 or operation S850 of FIG. 8, and thus, detailed descriptions thereof will be omitted.

In operation S1220, the electronic device 1000 according to an embodiment of the present disclosure may receive a user input for enlarging or reducing the image of the 3D space displayed on the screen.

For example, the user may perform an input for enlarging the image of the 3D space to view a portion of the 3D space in detail. In addition, the user may perform an input to reduce the 3D space to view the 3D space at once.

According to an embodiment of the present disclosure, the user input for enlarging or reducing the image of the 3D space may include a predefined touch input, a predefined motion input, or a voice input, but is not limited thereto.

In operation S1230, the electronic device 1000 according to an embodiment of the present disclosure may enlarge or reduce the image of the 3D space displayed on the screen, based on the user input.

For example, based on a user input for enlarging the image of the 3D space, the electronic device 1000 may adjust the setting values of the camera (a distance between the camera and an object, a field of view, etc.), a position of the camera, etc. in the 3D space to enlarge the image of the 3D space. In this case, the size of the image indicator included in the image of the 3D space may also increase.

In contrast, based on a user input for reducing the image of the 3D space, the electronic device 1000 may adjust the setting values of the camera (a distance between the camera and an object, a field of view, etc.), a position of the camera, etc. in the 3D space to reduce the image of the 3D space. In this case, the size of the image indicator included in the image of the 3D space may also be reduced.

That is, when the electronic device 1000 enlarges or reduces the image of the 3D space displayed on the screen according to the user input, the size of the image indicator may deviate from the preset size (e.g., a preset DP value or a preset inch value).

In operation S1240, the electronic device 1000 according to an embodiment of the present disclosure may reduce or enlarge the size ratio of the image indicator in the 3D space, based on a predetermined DP value (or inch value) of the image indicator.

For example, when the size of the image indicator increases as the image of the 3D space is enlarged, the electronic device 1000 may reduce the size ratio of the image indicator in the 3D space, based on the DP value (or inch value) of the image indicator determined in operation S320 (or operation S820). That is, the electronic device 1000 may reduce the size of the image indicator by the predetermined DP value (or predetermined inch value) while maintaining the 3D space in the enlarged state.

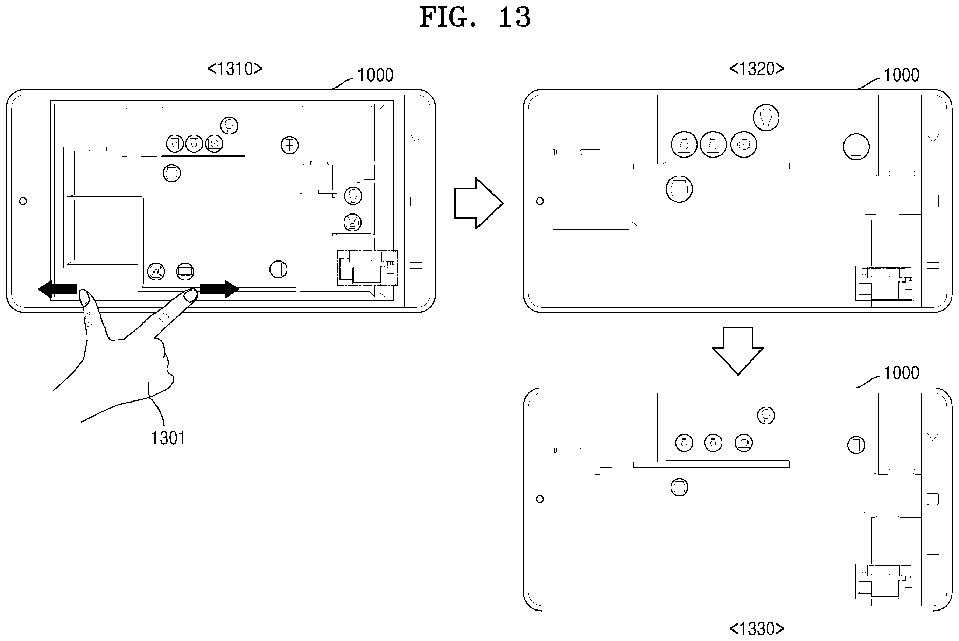

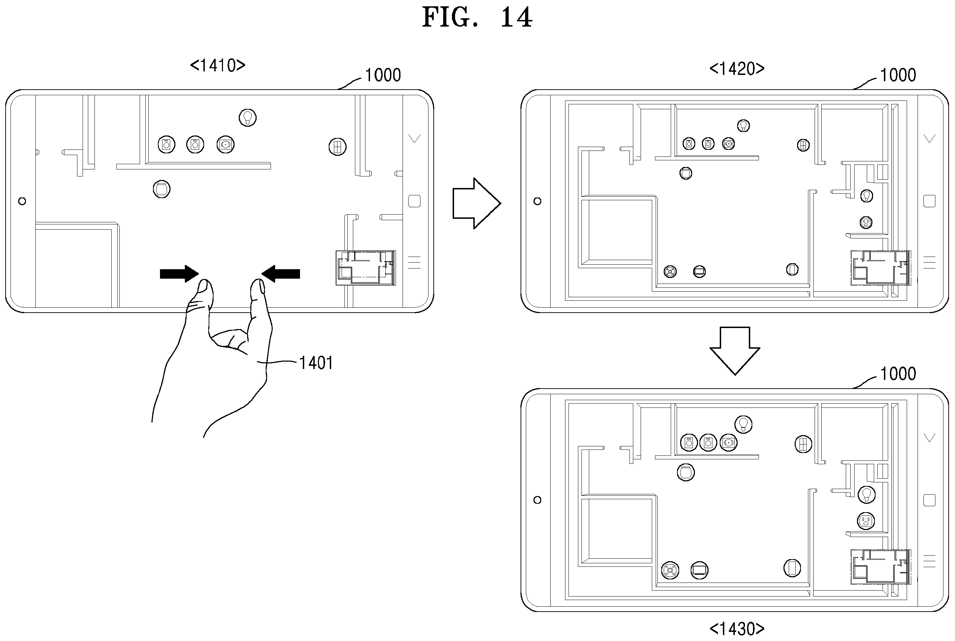

With reference to FIGS. 13 and 14, an operation, performed by the electronic device 1000, of reducing or enlarging a size ratio of an image indicator in a 3D space will be described in more detail.

FIG. 13 is a diagram illustrating an operation, performed by the electronic device 1000, of enlarging a size ratio of an image indicator in a 3D space, according to an embodiment of the present disclosure. FIG. 13 illustrates an example in which a size at which an image indicator is to be displayed on a screen is 72 DP.

Referring to a screen 1310 of FIG. 13, the electronic device 1000 may display an image of a 3D space on a screen by adjusting setting values of a camera such that a size of image indicators displayed on the screen becomes 72 DP. In this case, the user may perform an input 1301 for enlarging the image of the 3D space to view a status of a living room and kitchen in detail. For example, the user may perform a pinch-out gesture on the image of the 3D space, but is not limited thereto. The pinch-out gesture is a gesture that uses two fingers to enlarge the screen.

Referring to a screen 1320 of FIG. 13, when the electronic device 1000 detects a pinch-out gesture, the electronic device 1000 may enlarge and display the image of the 3D space. In this case, the size of the image indicators included in the image of the 3D space may also be enlarged. For example, when the image of the 3D space is enlarged by a factor of two, the size of the image indicators may also be enlarged by a factor of two to become 144 DP.

Referring to a screen 1330 of FIG. 13, when the size of the image indicators exceeds a predetermined size (e.g., 72 DP), the electronic device 1000 may maintain the 3D space in the enlarged state, and may reduce only the size of the image indicators to be 72 DP. That is, the electronic device 1000 may reduce a size ratio of the image indicators in the 3D space by half. For example, the size ratio of the image indicators on the screen 1310 may be $1/20 \ (= \dfrac{1\,unit}{20unit})$ , but

the size ratio of the image indicators on the screen 1330 may be $1/40 \ (= \dfrac{\frac{1}{2}\,unit}{20unit})$ .

Therefore, according to an embodiment of the present disclosure, the electronic device 1000 may adjust the size of the image indicators (e.g., icons) to remain constant even when the image of the 3D space is enlarged.

FIG. 14 is a diagram illustrating an operation, performed by the electronic device 1000, of reducing a size ratio of an image indicator in a 3D space, according to an embodiment of the present disclosure. FIG. 14 illustrates an example in which a size at which an image indicator is to be displayed on a screen is 72 DP.

Referring to a screen 1410 of FIG. 14, the electronic device 1000 may display an image of a 3D space on a screen by adjusting setting values of a camera such that a size of image indicators displayed on the screen becomes 72 DP. In this case, the user may perform an input 1401 for reducing the image of the 3D space to view the 3D space as a whole. For example, the user may perform a pinch-in gesture on the image of the 3D space, but is not limited thereto. The pinch-in gesture is a gesture that uses two fingers to reduce the screen.

Referring to a screen 1420 of FIG. 14, when the electronic device 1000 detects a pinch-in gesture, the electronic device 1000 may reduce and display the image of the 3D space. In this case, the size of the image indicators included in the image of the 3D space may also be reduced. For example, when the image of the 3D space is reduced to 1/2, the size of the image indicators may also be reduced to 1/2 to become 36 DP.

Referring to a screen 1430 of FIG. 14, when the size of the image indicators is smaller than a predetermined size (e.g., 72 DP), the electronic device 1000 may maintain the 3D space in the reduced state, and may enlarge only the size of the image indicators to be 72 DP. That is, the electronic device 1000 may increase the size ratio of the image indicators in the 3D space by a factor of two. For example, the size ratio of the image indicators on the screen 1410 may be

$1/20 \ (= \dfrac{1\,unit}{20\,unit})$ , but the size ratio of the image indicators on the screen 1430 may be $1/10 \ (= \dfrac{2\,unit}{20\,unit})$ .

Therefore, according to an embodiment of the present disclosure, the electronic device 1000 may adjust the size of the image indicators (e.g., icons) to remain constant even when the image of the 3D space is reduced.

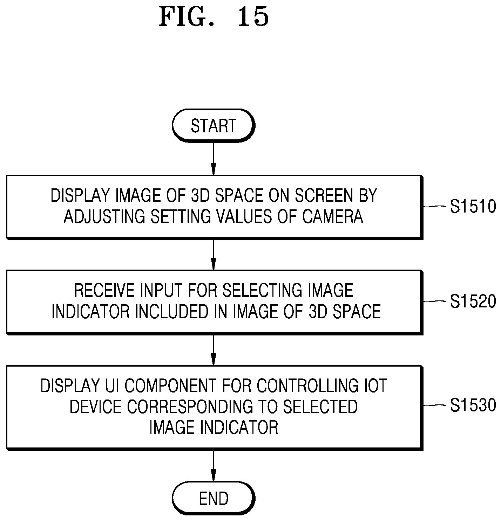

FIG. 15 is a flowchart illustrating a method, performed by the electronic device 1000, of displaying a user interface (UI) component for controlling the IoT device 3000, according to an embodiment of the present disclosure.

In operation S1510, the electronic device 1000 according to an embodiment of the present disclosure may display an image of a 3D space on a screen by adjusting setting values of a camera. For example, the electronic device 1000 may determine a DP value (or inch value) of an image indicator corresponding to the size at which the image indicator is to be displayed on the screen. The electronic device 1000 may determine, based on the DP value (or inch value) of the image indicator, a size ratio of the image indicator in the 3D space, and a DP value (or inch value) of the electronic device 1000, a magnification for enlarging or reducing the 3D space. The electronic device 1000 may display the image of the 3D space on the screen by adjusting the setting values of the camera in the 3D space according to the determined magnification. In this case, the electronic device 1000 may display an image indicator of a preset size.

Operation S1510 corresponds to operation S350 of FIG. 3 or operation S850 of FIG. 8, and thus, detailed descriptions thereof will be omitted.

In operation S1520, the electronic device 1000 according to an embodiment of the present disclosure may receive an input for selecting an image indicator included in the image of the 3D space. The input for selecting an image indicator may include a touch input, a motion input, or a voice input, but is not limited thereto.

For example, the electronic device 1000 may receive a user input for touching a first image indicator corresponding to a first IoT device, among a plurality of image indicators included in the image of the 3D space.

In operation S1530, the electronic device 1000 according to an embodiment of the present disclosure may display a UI component for controlling the IoT device 3000 corresponding to the selected image indicator.

For example, when the first image indicator corresponding to the first IoT device is selected, the electronic device 1000 may display a first UI component (e.g., a power button, a start button, a stop button, etc.) for controlling the first IoT device near the first image indicator. In this case, the user may easily control the first IoT device by using the first UI component.

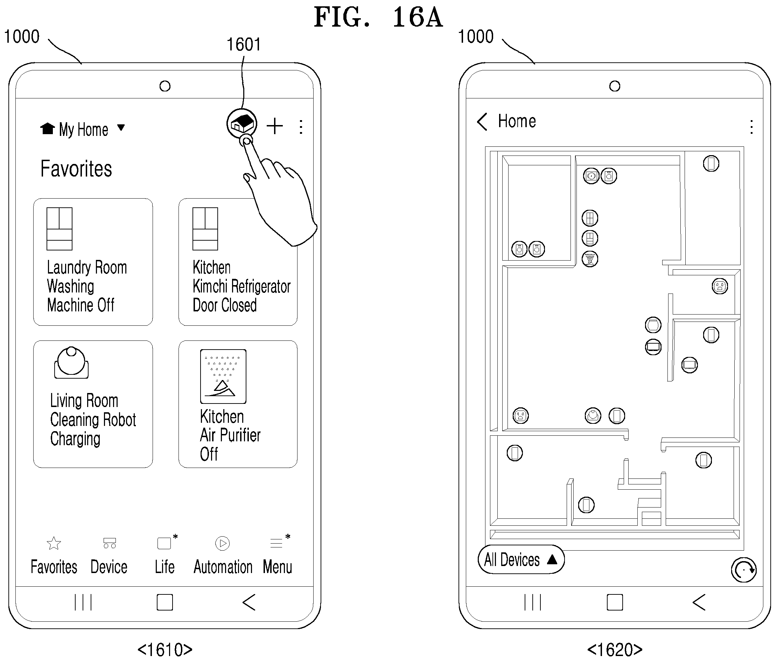

Hereinafter, an operation, performed by the electronic device 1000, of displaying a UI component for controlling the IoT device 3000 will be described in more detail with reference to FIGS. 16A to 16C.

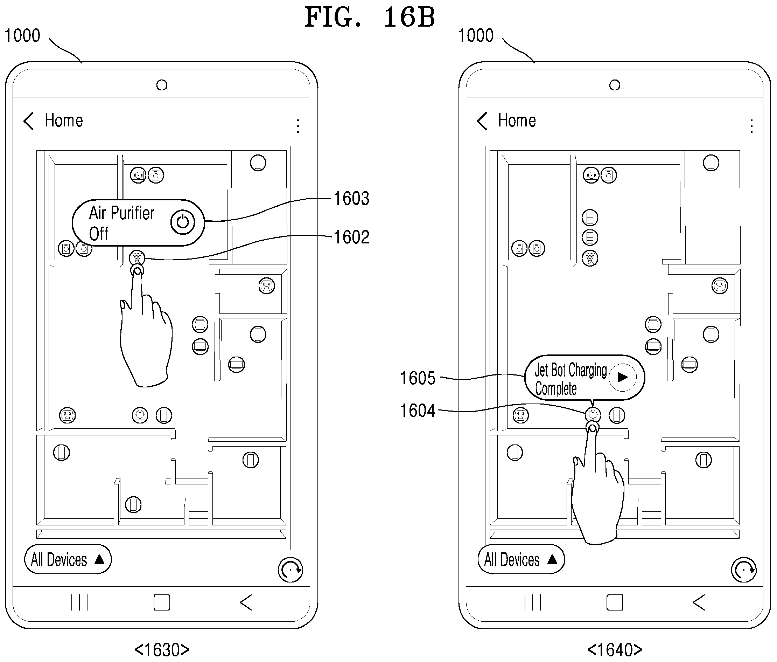

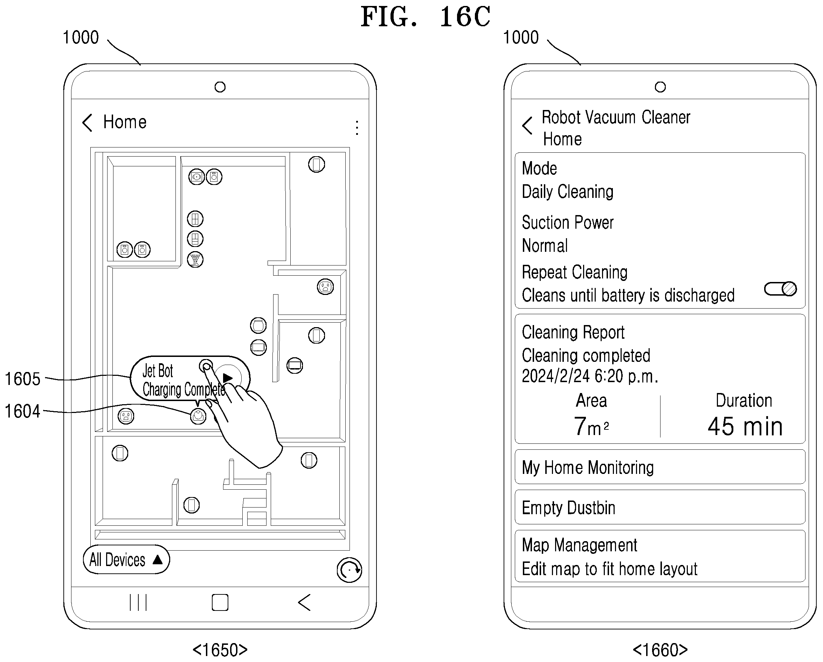

FIG. 16A is a diagram illustrating an operation, performed by the electronic device 1000, of displaying an image of a 3D space, according to an embodiment of the present disclosure. FIG. 16B is a diagram illustrating an operation, performed by the electronic device 1000, of displaying a UI component for controlling the IoT device 3000, according to an embodiment of the present disclosure. FIG. 16C is a diagram illustrating an operation, performed by the electronic device 1000, of providing status information of the IoT device 3000, according to an embodiment of the present disclosure.

Referring to 1610 of FIG. 16A, the electronic device 1000 may execute an application for managing the IoT device 3000. In this case, an application execution window may display a list of IoT devices (e.g., a washing machine, a kimchi refrigerator, a robot vacuum cleaner, an air purifier, etc.) registered to the server 2000 under a user account. In addition, the application execution window may display an item 1601 for requesting an image (e.g., a map view) of a 3D space.

When the user touches the item 1601, the electronic device 1000 may configure and provide an image of the 3D space.

Referring to 1620 of FIG. 16A, the electronic device 1000 may display an image of the 3D space corresponding to the user's home, which has been pre-registered to the server 2000 by the user. In this case, the image of the 3D space may include image indicators (e.g., icons) corresponding to IoT devices arranged in the user's home (e.g., a washing machine, a dryer, an air purifier, a robot vacuum cleaner, a lighting device, a refrigerator, an oven, etc.). The electronic device 1000 may determine a size (e.g., 72 DP) at which the image indicators are to be displayed on the screen, and may adjust setting values of a camera (e.g., a distance between the camera and an object or a field of view of the camera) such that the image indicators are displayed at the determined size (e.g., 72 DP).

Referring to 1630 of FIG. 16B, the electronic device 1000 may receive a user input for selecting a first image indicator 1602 corresponding to an air purifier, from among the image indicators corresponding to the IoT devices. In response to the user input for selecting the first image indicator 1602, the electronic device 1000 may display a first UI component 1603 for controlling the air purifier near the first image indicator 1602. The first UI component 1603 may include a status of the air purifier (e.g., off) and a power button. When the user touches the power button included in the first UI component 1603, the electronic device 1000 may transmit an operation command to the air purifier through the server 2000.

Referring to 1640 of FIG. 16B, the electronic device 1000 may receive a user input for selecting a second image indicator 1604 corresponding to a robot vacuum cleaner. In response to the user input for selecting the second image indicator 1604, the electronic device 1000 may display a second UI component 1605 for controlling the robot vacuum cleaner near the second image indicator 1604. The second UI component 1605 may include a status of the robot vacuum cleaner (e.g., charging complete) and a start button. When the user touches the start button included in the second UI component 1605, the electronic device 1000 may transmit a cleaning start command to the robot vacuum cleaner through the server 2000.

Therefore, according to an embodiment of the present disclosure, the user may control operations of the IoT devices by using the image indicators displayed at a constant size on the screen of the electronic device 1000.

Referring to 1650 of FIG. 16C, the electronic device 1000 may receive an input for selecting the second UI component 1605 for controlling the robot vacuum cleaner. For example, the electronic device 1000 may receive an input for touching an area of the second UI component 1605 where the start button is not displayed.

Referring to 1660 of FIG. 16C, in response to the user input for selecting the second UI component 1605, the electronic device 1000 may display a page providing detailed information about the robot vacuum cleaner. For example, the electronic device 1000 may display a page including a mode of the robot vacuum cleaner (e.g., daily cleaning), suction power (e.g., normal), cleaning report, empty dustbin, map management, etc.

Therefore, according to an embodiment of the present disclosure, the user easily access a page providing detailed information about the IoT devices by using the image indicators displayed at a constant size on the screen of the electronic device 1000.

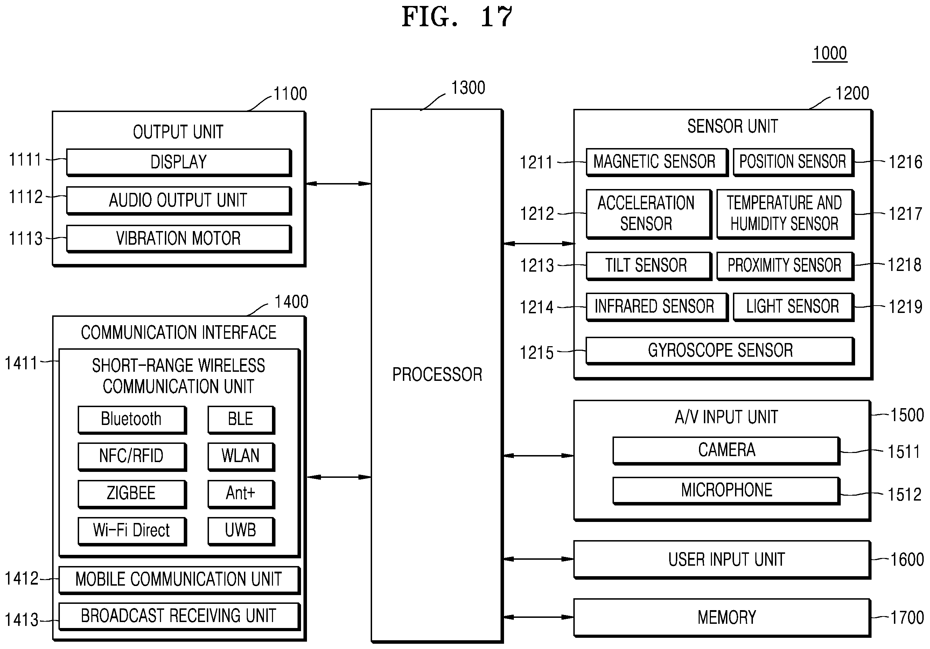

FIG. 17 is a block diagram illustrating functions of the electronic device 1000 according to an embodiment of the present disclosure.

As illustrated in FIG. 17, the electronic device 1000 according to an embodiment of the present disclosure may include an output unit 1100, a sensor unit 1200, a processor 1300, a communication interface 1400, an A/V input unit 1500, a user input unit 1600, and memory 1700. However, not all components illustrated in FIG. 17 are essential components. The electronic device 1000 may be implemented with more components than the illustrated components, or the electronic device 1000 may be implemented with fewer components. For example, the electronic device 1000 may be implemented with the memory 1700 and the processor 1300.

Hereinafter, the aforementioned components will be sequentially described.

The output unit 1100 is for outputting an audio signal, a video signal, or a vibration signal, and may include a display 1111, an audio output unit 1112, a vibration motor 1113, etc.

The audio output unit 1112 outputs audio data received from the communication interface 1400 or stored in the memory 1700. The audio output unit 1112 outputs an audio signal related to a function performed by the electronic device 1000 (e.g., call signal reception sound, message reception sound, or notification sound). The audio output unit 1112 may include a speaker, a buzzer, etc.

The vibration motor 1113 may output a vibration signal. For example, the vibration motor 1113 may output a vibration signal corresponding to an output of audio data or video data (e.g., call signal reception sound, message reception sound, etc.). In addition, the vibration motor 1113 may output a vibration signal when a touch is input to the touch screen.

The output unit 1100 may output an image of a 3D space. In this case, the image of the 3D space may include an image indicator displayed on the screen at a preset size. The image indicator may be a UI element for controlling the IoT device 3000. For example, an image indicator may be an icon image, but is not limited thereto.

The sensor unit 1200 may include at least one of a magnetic sensor 1211, an acceleration sensor 1212, a tilt sensor 1213, an infrared sensor 1214, a gyroscope sensor 1215, a position sensor (e.g., a GPS) 1216, a temperature and humidity sensor 1217, a proximity sensor 1218, and a light sensor 1219, but is not limited thereto. Functions of respective sensors may be intuitively inferred by one of ordinary skill in the art from the name thereof, and thus, detailed descriptions thereof will be omitted.

The processor 1300 generally controls overall operations of the electronic device 1000. For example, the processor 1300 may control the output unit 1100, the sensor unit 1200, the communication interface 1400, the A/V input unit 1500, the user input unit 1600, the memory 1700, etc., by executing programs stored in the memory 1700.

The processor 1300 may include one or more processors. The one or more processors included in the processor 1300 may include circuitry, such as a system-on-chip (SoC) or an integrated circuit (IC). The one or more processors included in the processor 1300 may be a general-purpose processor such as a central processing unit (CPU), a microprocessor unit (MPU), an application processor (AP), or a digital signal processor (DSP), a graphics-dedicated processor such as a graphics processing unit (GPU) or a vision processing unit (VPU), an artificial intelligence-dedicated processor such as a neural processing unit (NPU), or a communication-dedicated processor such as a communication processor (CP). When the one or more processors included in the processor 1300 are artificial intelligence-dedicated processors, the artificial intelligence-dedicated processors may be designed in a hardware structure specialized for processing a specific artificial intelligence model. The processor 1300 may be implemented as a single core processor or as a multicore processor.

The processor 1300 may write data to the memory 1700 or read data stored in the memory 1700, and in particular, may process data according to predefined operation rules or artificial intelligence models by executing a program or at least one instruction stored in the memory 1700.

The communication interface 1400 may include one or more components that enable communication between the electronic device 1000 and the IoT device 3000 or between the electronic device 1000 and the server 2000. For example, the communication interface 1400 may include a short-range wireless communication unit 1411, a mobile communication unit 1412, and a broadcast receiving unit 1413.

The short-range wireless communication unit 1411 may include a Bluetooth communication unit, a Bluetooth Low Energy (BLE) communication unit, a near-field communication unit, a WLAN (WiFi) communication unit, a Zigbee communication unit, an Infrared Data Association (IrDA) communication unit, a Wi-Fi Direct (WFD) communication unit, an ultra-wideband (UWB) communication unit, an Ant+ communication unit, etc., but is not limited thereto.

The mobile communication unit 1412 transmits and receives a wireless signal to and from at least one of a base station, an external terminal, or a server on a mobile communication network. Here, the wireless signal may include various types of data according to transmission/reception of a voice call signal, a video call signal, or a text/multimedia message.

The broadcast receiving unit 1413 receives a broadcast signal and/or broadcast-related information from the outside through a broadcast channel. The broadcast channel may include a satellite channel and a terrestrial channel. According to an embodiment, the electronic device 1000 may not include the broadcast receiving unit 1413.

The A/V input unit 1500 is for inputting an audio signal or a video signal, and may include a camera 1511, a microphone 1512, etc. The camera 1511 may obtain an image frame, such as a still image or a moving image, through an image sensor in a video call mode or a photographing mode. The image captured through the image sensor may be processed through the processor 1300 or a separate image processing unit (not shown). The image frame processed by the camera 1511 may be stored in the memory 1700, or may be transmitted to the outside through the communication interface 1400. According to an embodiment of the present disclosure, the camera 1511 may include at least one of a telephoto camera, a wide-angle camera, or a general camera, but is not limited thereto.

The microphone 1512 may receive an external audio signal and process the audio signal into electrical voice data. For example, the microphone 1512 may receive an audio signal from an external device or a speaker. The microphone 1512 may use various noise removal algorithms for removing noise generated in a process of receiving an external audio signal.

The user input unit 1600 refers to a means by which the user inputs data for controlling the electronic device 1000. For example, the user input unit 1600 may include a keypad, a dome switch, a touch pad (a contact capacitive type, a pressure resistive film type, an infrared sensing type, a surface acoustic wave conduction type, an integrated tension measurement type, a piezoelectric effect type, etc.), a jog wheel, a jog switch, etc. but is not limited thereto.

The memory 1700 may store a program for processing and control by the processor 1300, and may also store input/output data (e.g., voice data, photo images, memo data, user's biometric information, etc.).

The memory 1700 may include at least one type of storage medium among a flash memory type, a hard disk type, a multimedia card micro type, card type memory (e.g., SD or XD memory), random access memory (RAM), static random access memory (SRAM), read-only memory (ROM), electrically erasable programmable read-only memory (EEPROM), programmable read-only memory (PROM), magnetic memory, a magnetic disk, or an optical disk.

The memory 1700 may not exist separately and may be included in the processor 1300. The memory 1700 may include a volatile memory, a non-volatile memory, or a combination of a volatile memory and a non-volatile memory. The memory 1700 may store a program or at least one instruction for performing operations according to an embodiment of the present disclosure. The memory 1700 may also provide data stored therein to the processor 1300 at a request of the processor 1300.

An embodiment of the present disclosure relates to an electronic device 1000 that specifies a size at which an image indicator (e.g., an icon) is to be displayed to a user having multiple devices, and adjusts setting values of a camera in a 3D space to display the image indicator (e.g., an icon) at the same size on all devices, according to the specified size.

According to an embodiment of the present disclosure, a method, performed by the electronic device 1000, of providing an image of a 3D space may include: obtaining setting values of a camera, for fitting a 3D space to a screen of the electronic device 1000, the 3D space including an image indicator for controlling an IoT device 3000; determining a density-independent pixel (DP) value of the image indicator, the DP value corresponding to a size at which the image indicator is to be displayed on the screen; obtaining, based on the DP value of the image indicator, a size ratio of the image indicator in the 3D space, and a DP value of the electronic device 1000, a magnification for enlarging or reducing the 3D space; adjusting the setting values of the camera based on the magnification for enlarging or reducing the 3D space; and displaying, on the screen of the electronic device 1000, the image of the 3D space enlarged or reduced by applying the adjusted setting values of the camera.

According to an embodiment of the present disclosure, when initially entering a space (map) or changing a space (map), the user may receive a consistent experience in which the user may check a status of IoT devices and operate the devices through image indicators (e.g. icons) of the same size across multiple devices. In addition, because the space (map) is automatically zoomed in around an image indicator (e.g., icon), the space may be displayed in an enlarged state without a separate enlargement operation experience, even in an electronic device 1000 with a small display. In contrast, in an electronic device 1000 with a large display, the user may view the entire map and check a status of IoT devices and operate the devices. Therefore, according to an embodiment of the present disclosure, by providing users who owns multiple devices with a function for processing camera adjustments in a 3D space according to characteristics of various electronic devices, a consistent experience and a more efficient and convenient experience of operating the IoT device 3000 may be provided to the users.

According to an embodiment of the present disclosure, the determining of the DP value of the image indicator may include: obtaining a DP value of each of at least one electronic device configured to provide the image of the 3D space; selecting a representative electronic device from among the at least one electronic device; and determining a specific ratio value of the DP value of the representative electronic device as the DP value of the image indicator.

According to an embodiment of the present disclosure, the selecting of the representative electronic device may include selecting the representative electronic device based on usage count information of each of the at least one electronic device.

According to an embodiment of the present disclosure, the selecting of the representative electronic device may include selecting, as the representative electronic device, an electronic device separately designated by a user.

According to an embodiment of the present disclosure, the obtaining of the magnification for enlarging or reducing the 3D space may include: obtaining, from a server, size information of the image indicator in the 3D space; determining a size of the 3D space based on a distance between the camera and an object among the setting values of the camera; and determining the size ratio of the image indicator in the 3D space, based on the size of the 3D space and the size information of the image indicator.

According to an embodiment of the present disclosure, the determining of the size ratio of the image indicator in the 3D space may include: obtaining, from the server, size information of a plurality of image indicators corresponding to a plurality of IoT devices in the 3D space (S610); when the plurality of image indicators have different sizes, selecting, as a representative indicator, a first image indicator corresponding to a first IoT device among the plurality of IoT devices (S640); and determining a size ratio of the first image indicator in the 3D space, based on the size of the 3D space and the size information of the first image indicator selected as the representative indicator.

According to an embodiment of the present disclosure, the selecting of the first image indicator as the representative indicator may include selecting, as the representative indicator, the first image indicator corresponding to the first IoT device among the plurality of IoT devices, based on control count information of the plurality of IoT devices.

According to an embodiment of the present disclosure, the selecting of the first image indicator as the representative indicator may include selecting, as the representative indicator, the first image indicator corresponding to the first IoT device designated by a user.

According to an embodiment of the present disclosure, the adjusting of the setting values of the camera may include adjusting at least one of a distance between the camera and an object in the 3D space or a field of view of the camera.

According to an embodiment of the present disclosure, the magnification for enlarging or reducing the 3D space may increase as the DP value of the electronic device decreases or the size of the 3D space increases.

According to an embodiment of the present disclosure, the method may include: determining an inch value of the image indicator, the inch value corresponding to the size at which the image indicator is to be displayed on the screen; and obtaining, based on the inch value of the image indicator, the size ratio of the image indicator in the 3D space, and an inch value of the electronic device, the magnification for enlarging or reducing the 3D space.

According to an embodiment of the present disclosure, the method may include: receiving a user input for enlarging or reducing the image of the 3D space displayed on the screen; in response to the user input, enlarging or reducing the image of the 3D space and displaying the image; and reducing or enlarging the size ratio of the image indicator in the 3D space, based on the DP value of the image indicator.

According to an embodiment of the present disclosure, an electronic device 1000 for providing an image of a 3D space may include: memory 1700 storing one or more instructions; and at least one processor 1300. The at least one processor 1300 may execute the one or more instructions to obtain setting values of a camera, for fitting the 3D space to a screen of the electronic device 1000, the 3D space including an image indicator for controlling an IoT device 3000. The at least one processor 1300 may determine a DP value of the image indicator, the DP value corresponding to a size at which the image indicator is to be displayed on the screen. The at least one processor 1300 may obtain, based on the DP value of the image indicator, a size ratio of the image indicator in the 3D space, and a DP value of the electronic device 1000, a magnification for enlarging or reducing the 3D space. The at least one processor 1300 may adjust the setting values of the camera based on the magnification for enlarging or reducing the 3D space. The at least one processor 1300 may display, on the screen of the electronic device 1000, an image of the 3D space enlarged or reduced by applying the adjusted setting values of the camera.

According to an embodiment of the present disclosure, the at least one processor may execute the one or more instructions to obtain a DP value of each of at least one electronic device configured to provide the image of the 3D space. The at least one processor may select a representative electronic device from among the at least one electronic device. The at least one processor may determine a specific ratio value of the DP value of the representative electronic device as the DP value of the image indicator.

According to an embodiment of the present disclosure, the at least one processor may execute the one or more instructions to select the representative electronic device from among the at least one electronic device, based on usage count information of each of the at least one electronic device.

According to an embodiment of the present disclosure, the at least one processor may execute the one or more instructions to obtain size information of the image indicator in the 3D space from a server through a communication interface. The at least one processor may determine a size of the 3D space based on a distance from the camera to an object included in the 3D space, among the setting values of the camera. The at least one processor may determine the size ratio of the image indicator in the 3D space, based on the size of the 3D space and the size information of the image indicator.

According to an embodiment of the present disclosure, the at least one processor may execute the one or more instructions to obtain, from the server, size information of a plurality of image indicators corresponding to a plurality of IoT devices in the 3D space. The at least one processor may, when the plurality of image indicators have different sizes, select, as a representative indicator, a first image indicator corresponding to a first IoT device among the plurality of IoT devices. The at least one processor may determine a size ratio of the first image indicator in the 3D space, based on the size of the 3D space and the size information of the first image indicator selected as the representative indicator.

According to an embodiment of the present disclosure, the at least one processor may execute the one or more instructions to adjust at least one of a distance from the camera to an object included in the 3D space or a field of view of the camera, based on the magnification for enlarging or reducing the 3D space.

According to an embodiment of the present disclosure, the at least one processor may execute the one or more instructions to determine an inch value of the image indicator, the inch value corresponding to the size at which the image indicator is to be displayed on the screen. The at least one processor may obtain, based on the inch value of the image indicator, a size ratio of the image indicator in the 3D space, and an inch value of the electronic device 1000, the magnification for enlarging or reducing the 3D space.

A machine-readable storage medium may be provided in the form of a non-transitory storage medium. Here, the "non-transitory storage medium" refers to a tangible device and does not include a signal (e.g., an electromagnetic wave), and this term does not distinguish between a case where data is stored in the storage medium semi-permanently and a case where data is stored in the storage medium temporarily. For example, the "non-transitory storage medium" may include a buffer in which data is temporarily stored.

According to an embodiment, the method according to various embodiments disclosed herein may be provided by being included in a computer program product. The computer program product may be traded as a commercial product between a seller and a buyer. The computer program product may be distributed in the form of a machine-readable storage medium (e.g., a compact disc read only memory (CD-ROM) or a universal serial bus (USB) flash drive), or may be distributed online (e.g., downloaded or uploaded) through an application store or directly between two user devices (e.g., smartphones). In the case of online distribution, at least a part of the computer program product (e.g., a downloadable application) may be at least temporarily generated or temporarily stored in a machine-readable storage medium, such as a server of a manufacturer, a server of an application store, or a memory of a relay server.

**Claims**

1. A method, performed by an electronic device (1000), of providing an image of a 3D space, the method comprising:

   obtaining a setting value of a camera to fit the 3D space to a screen of the electronic device, the 3D space including an image indicator for controlling an IoT device (S310);
   determining a density-independent pixel (DP) value of the image indicator, the DP value corresponding to a size at which the image indicator is to be displayed on the screen (S320);
   obtaining, based on the DP value of the image indicator, a size ratio of the image indicator in the 3D space, and a DP value of the electronic device, a magnification for enlarging or reducing the 3D space (S330);
   adjusting the setting value of the camera based on the magnification for enlarging or reducing the 3D space (S340); and
   displaying, on the screen of the electronic device, the image of the 3D space enlarged or reduced by applying the adjusted setting value of the camera (S350).

2. The method of claim 1, wherein the determining of the DP value of the image indicator comprises:

   obtaining a DP value of each of at least one electronic device configured to provide the image of the 3D space;
   selecting a representative electronic device from among the at least one electronic device; and
   determining a specific ratio value of the DP value of the representative electronic device as the DP value of the image indicator.

3. The method of claim 2, wherein the selecting of the representative electronic device comprises selecting the representative electronic device based on usage count information of each of the at least one electronic device.

4. The method of claim 2, wherein the selecting of the representative electronic device comprises selecting, as the representative electronic device, an electronic device separately designated by a user.

5. The method of any one of claims 1 to 4, wherein the obtaining of the magnification for enlarging or reducing the 3D space comprises:

   obtaining, from a server, size information of the image indicator in the 3D space;
   determining a size of the 3D space based on a distance between the camera and an object among the setting value of the camera; and
   determining the size ratio of the image indicator in the 3D space, based on the size of the 3D space and the size information of the image indicator.

6. The method of claim 5, wherein the determining of the size ratio of the image indicator in the 3D space comprises:

   obtaining, from the server, size information of a plurality of image indicators corresponding to a plurality of IoT devices in the 3D space (S610);
   when the plurality of image indicators have different sizes, selecting, as a representative indicator, a first image indicator corresponding to a first IoT device among the plurality of IoT devices (S640); and
   determining a size ratio of the first image indicator in the 3D space, based on the size of the 3D space and the size information of the first image indicator selected as the representative indicator (S650).

7. The method of claim 6, wherein the selecting of the first image indicator as the representative indicator comprises selecting, as the representative indicator, the first image indicator corresponding to the first IoT device among the plurality of IoT devices, based on control count information of the plurality of IoT devices.

8. The method of claim 6, wherein the selecting of the first image indicator as the representative indicator comprises selecting, as the representative indicator, the first image indicator corresponding to the first IoT device designated by a user.

9. The method of any one of claims 1 to 8, wherein the adjusting of the setting values of the camera comprises adjusting at least one of a distance between the camera and an object in the 3D space or a field of view of the camera.

10. The method of any one of claims 1 to 9, wherein the magnification for enlarging or reducing the 3D space increases as the DP value of the electronic device decreases or the size of the 3D space increases.

11. The method of any one of claims 1 to 10, further comprising:

determining an inch value of the image indicator, the inch value corresponding to the size at which the image indicator is to be displayed on the screen (S820); and
obtaining, based on the inch value of the image indicator, the size ratio of the image indicator in the 3D space, and an inch value of the electronic device, the magnification for enlarging or reducing the 3D space (S830).

12. The method of any one of claims 1 to 11, further comprising:

receiving a user input for enlarging or reducing the image of the 3D space displayed on the screen (S1220);
in response to the user input, enlarging or reducing the image of the 3D space and displaying the image (S1230); and
reducing or enlarging the size ratio of the image indicator in the 3D space, based on the DP value of the image indicator (S1240).

13. An electronic device (1000) for providing an image of a 3D space, the electronic device (1000) comprising:

a memory (1700) to store one or more instructions; and
at least one processor (1300)to execute the one or more instructions to:

obtain setting value of a camera to fit the 3D space to a screen of the electronic device (1000), the 3D space including an image indicator for controlling an IoT device (3000),
determine a DP value of the image indicator, the DP value corresponding to a size at which the image indicator is to be displayed on the screen,
obtain, based on the DP value of the image indicator, a size ratio of the image indicator in the 3D space, and a DP value of the electronic device (1000), a magnification for enlarging or reducing the 3D space,
adjust the setting value of the camera based on the magnification for enlarging or reducing the 3D space, and
display, on the screen of the electronic device (1000), the image of the 3D space enlarged or reduced by applying the adjusted setting value of the camera.

14. The electronic device of claim 13, wherein the at least one processor executes the one or more instructions to

obtain a DP value of each of at least one electronic device configured to provide the image of the 3D space,
select a representative electronic device from among the at least one electronic device, and
determine a specific ratio value of the DP value of the representative electronic device as the DP value of the image indicator.

15. A computer-readable recording medium having recorded thereon a program for performing, on a computer, the method of any one of claims 1 to 12.

**FIG. 1**

# FIG. 2

# FIG. 3

START

OBTAIN SETTING VALUES OF CAMERA FOR FITTING 3D SPACE INCLUDING IMAGE INDICATOR FOR CONTROLLING IOT DEVICE TO SCREEN OF ELECTRONIC DEVICE — S310

DETERMINE DENSITY-INDEPENDENT PIXEL (DP) VALUE OF IMAGE INDICATOR CORRESPONDING TO SIZE AT WHICH IMAGE INDICATOR IS TO BE DISPLAYED ON SCREEN — S320

OBTAIN, BASED ON DP VALUE OF IMAGE INDICATOR, SIZE RATIO OF IMAGE INDICATOR IN 3D SPACE, AND DP VALUE OF ELECTRONIC DEVICE, MAGNIFICATION FOR ENLARGING OR REDUCING 3D SPACE — S330

ADJUST SETTING VALUES OF CAMERA BASED ON MAGNIFICATION FOR ENLARGING OR REDUCING 3D SPACE — S340

DISPLAY, ON SCREEN OF ELECTRONIC DEVICE, IMAGE OF 3D SPACE ENLARGED OR REDUCED BY APPLYING ADJUSTED SETTING VALUES OF CAMERA — S350

END

# FIG. 4

Representative device

1000-1

FIRST DP VALUE OR
FIRST INCH VALUE (401)

1000-2

1000

SECOND DP VALUE OR
SECOND INCH VALUE (402)

THIRD DP VALUE OR
THIRD INCH VALUE (403)

1000-3

Representative device: 720 DP, 8 in
Screen display size of image indicator
  = Representative device size X Preset ratio
  = (720 DP, 8 in) X 1/10
  = 72 DP, 0.8 in

FOURTH DP VALUE OR
FOURTH INCH VALUE (404)

1000-4

# FIG. 5

Camera

FoV

d: Distance between camera and object in 3D space

Size of actual screen and space when space is fitted to screen
(d * Tan(FoV) * 2 = 20 unit)

Enlargement/reduction magnification = DP value of image indicator /
[(Current DP of device) * {(Size of image indicator) /
(Distance between camera and object * Tan(Current FoV of camera) * 2)}]

Size of image indicator: 1 unit
Size of 3D space: 20 unit
Size ratio of image indicator in 3D space: 1/20

Current DP of device: 360 DP
360 DP * 1/20 = 18 DP
(Image indicator currently displayed at 18 DP)

DP value of image indicator: 72 DP
Enlargement/reduction magnification = 72 DP / 18 DP
= 4 (4x enlargement required)

EP 4 773 087 A1

# FIG. 6

S230

OBTAIN INFORMATION OF 3D SPACE
(SIZE INFORMATION OF PLURALITY OF
IMAGE INDICATORS CORRESPONDING
TO PLURALITY OF IOT DEVICES)
FROM SERVER — S610

DO PLURALITY
OF IMAGE INDICATORS
HAVE DIFFERENT
SIZES? — S620

No

Yes

SELECT REPRESENTATIVE INDICATOR — S640

DETERMINE SIZE RATIO OF
IMAGE INDICATOR IN 3D SPACE,
BASED ON SIZE OF REPRESENTATIVE
INDICATOR — S650

DETERMINE SIZE RATIO OF
IMAGE INDICATOR IN 3D SPACE — S630

# FIG. 7

<710>

Size of all image indicators: 1 unit

700 <720>

Size of representative indicator: 2 unit

# FIG. 8

START

OBTAIN SETTING VALUES OF CAMERA FOR FITTING
3D SPACE INCLUDING IMAGE INDICATOR FOR
CONTROLLING IOT DEVICE TO SCREEN OF
ELECTRONIC DEVICE — S810

DETERMINE INCH VALUE OF IMAGE INDICATOR
CORRESPONDING TO SIZE AT WHICH IMAGE
INDICATOR IS TO BE DISPLAYED ON SCREEN — S820

OBTAIN, BASED ON INCH VALUE OF IMAGE INDICATOR,
SIZE RATIO OF IMAGE INDICATOR IN 3D SPACE,
AND INCH VALUE OF ELECTRONIC DEVICE,
MAGNIFICATION FOR ENLARGING OR REDUCING
3D SPACE — S830

ADJUST SETTING VALUES OF CAMERA BASED ON
MAGNIFICATION FOR ENLARGING OR REDUCING
3D SPACE — S840

DISPLAY, ON SCREEN OF ELECTRONIC DEVICE,
IMAGE OF 3D SPACE ENLARGED OR REDUCED BY
APPLYING ADJUSTED SETTING VALUES OF CAMERA — S850

END

EP 4 773 087 A1

FIG. 9

900

| DP | Inch | Size of 3D Space | Enlargement Ratio | Representative Status |
|---|---|---|---|---|
| 720 DP | 8 in | 10 unit | (DP) 720 * 1/10 /72 = 1 (1x)<br>(Inch) 8 * 1/10 / 0.8 = 1 (1x) | Representative device/<br>representative space |
| | | 20 unit | (DP) 720 * 1/20 /72 = 1/2 (2x)<br>(Inch) 8 * 1/20 / 0.8 = 1/2 (2x) | |
| | | 30 unit | (DP) 720 * 1/30 /72 = 1/3 (3x)<br>(Inch) 8 * 1/30 / 0.8 = 1/3 (3x) | |
| 360 DP | 4 in | 10 unit | (DP) 360 * 1/10 /72 = 1/2 (2x)<br>(Inch) 4 * 1/10 / 0.4 = 1/2 (2x) | |
| | | 20 unit | (DP) 360 * 1/20 /72 = 1/4 (4x)<br>(Inch) 4 * 1/20 / 0.4 = 1/4 (4x) | |
| 1440 DP | 8 in | 10 unit | (DP) 1440 * 1/10 /72 = 2 (1/2x)<br>(Inch) 8 * 1/10 / 0.8 = 1 (1x) | |
| | | 20 unit | (DP) 1440 * 1/20 /72 = 1 (1x)<br>(Inch) 8 * 1/20 / 0.8 = 1/2 (2x) | |

# FIG. 10

<1001>

<1002>

EP 4 773 087 A1

FIG. 11A

1000-2

<1102>

1000-1

<1101>

33

**FIG. 11B**

<1104>

<1103>

# FIG. 12

START

DISPLAY IMAGE OF 3D SPACE ON SCREEN
BY ADJUSTING SETTING VALUES OF CAMERA — S1210

RECEIVE USER INPUT FOR ENLARGING OR REDUCING
IMAGE OF 3D SPACE DISPLAYED ON SCREEN — S1220

ENLARGE OR REDUCE IMAGE OF 3D SPACE
BASED ON USER INPUT — S1230

REDUCE OR ENLARGE SIZE RATIO OF
IMAGE INDICATOR IN 3D SPACE,
BASED ON DP VALUE OF IMAGE INDICATOR — S1240

END

# FIG. 13

<1310>

1000

1301

<1320>

1000

<1330>

1000

FIG. 14

# FIG. 15

START

DISPLAY IMAGE OF 3D SPACE ON SCREEN BY ADJUSTING SETTING VALUES OF CAMERA ——— S1510

RECEIVE INPUT FOR SELECTING IMAGE INDICATOR INCLUDED IN IMAGE OF 3D SPACE ——— S1520

DISPLAY UI COMPONENT FOR CONTROLLING IOT DEVICE CORRESPONDING TO SELECTED IMAGE INDICATOR ——— S1530

END

EP 4 773 087 A1

# FIG. 16A

1000

1601

🏠 My Home ▼

🏠 📦 + ⋮

## Favorites

Laundry Room
Washing
Machine Off

Kitchen
Kimchi Refrigerator
Door Closed

Living Room
Cleaning Robot
Charging

Kitchen
Air Purifier
Off

☆ Favorites  🛒 Device  ☐* Life  ⊙ Automation  ≡* Menu

<1610>

1000

‹ Home                    ⋮

All Devices ▲

<1620>

# FIG. 16B

1603
1602

1000

Home

Air Purifier
Off

All Devices ▲

<1630>

1605
1604

1000

Home

Jet Bot Charging
Complete

All Devices ▲

<1640>

# FIG. 16C

<1650>

<1660>

EP 4 773 087 A1

# FIG. 17

## INTERNATIONAL SEARCH REPORT

| International application No. |
|---|
| **PCT/KR2024/014403** |

| | | |
|---|---|---|
| **A.** | **CLASSIFICATION OF SUBJECT MATTER** | |

**G06T 19/20**(2011.01)i; **G06T 19/00**(2011.01)i; **G06F 3/14**(2006.01)i; **G06F 3/04815**(2022.01)i; **G06F 3/0484**(2013.01)i; **G06T 3/40**(2006.01)i; **H04N 23/62**(2023.01)i; **G06T 7/62**(2017.01)i

According to International Patent Classification (IPC) or to both national classification and IPC

| | |
|---|---|
| **B.** | **FIELDS SEARCHED** |

Minimum documentation searched (classification system followed by classification symbols)

G06T 19/20(2011.01); G06F 1/16(2006.01); G06F 3/14(2006.01); G06N 3/02(2006.01); G06Q 50/10(2012.01); G06T 15/00(2006.01); H04L 12/12(2006.01); H04M 1/725(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 3D(three dimensional), IoT(Internet of Things), 이미지 인디케이터(image indicator), 공간(space), 카메라(camera), DP(Density-independent pixel), 확대(expansion)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | KR 10-2020-0055807 A (CANONICAL LIMITED) 21 May 2020 (2020-05-21)<br>See paragraph [0511]; and claim 1. | 1-2,4-5,9-15 |
| A | | 3,6-8 |
| Y | KR 10-2019-0094128 A (LG ELECTRONICS INC.) 12 August 2019 (2019-08-12)<br>See paragraphs [0224]-[0226]; claim 1; and figure 10. | 1-2,4-5,9-15 |
| Y | KR 10-2013-0082830 A (KT CORPORATION) 22 July 2013 (2013-07-22)<br>See paragraphs [0022] and [0047]; and figures 1-2. | 2,4,14 |
| A | KR 10-2016-0066292 A (ELECTRONICS AND TELECOMMUNICATIONS RESEARCH INSTITUTE) 10 June 2016 (2016-06-10)<br>See paragraphs [0013]-[0032]; and claims 1-10. | 1-15 |

| | | |
|---|---|---|
| ☑ Further documents are listed in the continuation of Box C. | | ☑ See patent family annex. |

| | |
|---|---|
| \*    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **07 January 2025** | **07 January 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/014403**

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2022-0058955 A (HUAWEI TECHNOLOGIES CO., LTD.) 10 May 2022 (2022-05-10)<br>See paragraphs [0012]-[0039]; and claims 1-8. | 1-15 |

Form PCT/ISA/210 (second sheet) (July 2022)

EP 4 773 087 A1

**INTERNATIONAL SEARCH REPORT**
Information on patent family members

International application No.

**PCT/KR2024/014403**

| Patent document cited in search report | | | Publication date (day/month/year) | Patent family member(s) | | | Publication date (day/month/year) |
|---|---|---|---|---|---|---|---|
| KR | 10-2020-0055807 | A | 21 May 2020 | CN | 111538406 | A | 14 August 2020 |
| | | | | EP | 2941687 | A1 | 11 November 2015 |
| | | | | HK | 1217793 | A1 | 20 January 2017 |
| | | | | JP | 2019-040622 | A | 14 March 2019 |
| | | | | JP | 6433915 | B2 | 05 December 2018 |
| | | | | KR | 10-1985291 | B1 | 04 June 2019 |
| | | | | KR | 10-2015-0104587 | A | 15 September 2015 |
| | | | | KR | 10-2019-0059995 | A | 31 May 2019 |
| | | | | KR | 10-2113697 | B1 | 22 May 2020 |
| | | | | US | 2014-0189523 | A1 | 03 July 2014 |
| | | | | US | 2022-0150344 | A1 | 12 May 2022 |
| | | | | US | 9930160 | B2 | 27 March 2018 |
| | | | | WO | 2014-106739 | A1 | 10 July 2014 |
| | | | | ZA | 201505153 | B | 30 August 2017 |
| KR | 10-2019-0094128 | A | 12 August 2019 | US | 11212132 | B2 | 28 December 2021 |
| | | | | US | 2020-0092124 | A1 | 19 March 2020 |
| KR | 10-2013-0082830 | A | 22 July 2013 | None | | | |
| KR | 10-2016-0066292 | A | 10 June 2016 | None | | | |
| KR | 10-2022-0058955 | A | 10 May 2022 | CN | 112558898 | A | 26 March 2021 |
| | | | | US | 12050831 | B2 | 30 July 2024 |
| | | | | US | 2022-0269463 | A1 | 25 August 2022 |
| | | | | WO | 2021-047251 | A1 | 18 March 2021 |

Form PCT/ISA/210 (patent family annex) (July 2022)